# EUROPEAN PATENT APPLICATION

(11) **EP 4 814 845 A1**
(43) Date of publication of application: **30.09.2026**
(21) Application number: 25166802.6
(22) Date of filing: 27.03.2025
(51) Int. Cl.: G06Q 30/018, A01B 79/00, G06Q 50/02

(54) **CROP PROTECTION**

(71) Applicant: Bayer Aktiengesellschaft, 51373 Leverkusen (DE)
(72) Inventor: The designation of the inventor has not yet been filed
(74) Representative: BIP Patents

(57) **Abstract**

Methods, systems, and infrastructures disclosed herein relate to crop protection, the effective and effective use of crop protection products, and the monitoring of the application of crop protection products.

## Description

### FIELD OF THE DISCLOSURE

Methods, systems, and infrastructures disclosed herein relate to crop protection.

### BACKGROUND

In the realm of agriculture, ensuring the health and productivity of crops is paramount to achieving food security and sustaining the agricultural economy. Crop protection plays a vital role in this endeavour, encompassing a range of practices and products designed to safeguard crops from pests, diseases, and weeds that can significantly reduce yield and quality. The essence of crop protection lies in its ability to enhance the resilience of crops against biotic stressors, thereby ensuring the stability of food supply chains and the livelihoods of farming communities.

Crop protection is indispensable for several reasons. Firstly, it directly contributes to increasing crop yields and quality, which is crucial for meeting the growing global food demand in the face of limited arable land and changing climate conditions. Secondly, effective crop protection strategies can reduce the reliance on arable land expansion, thus preserving natural habitats and biodiversity. Furthermore, crop protection measures are essential for maintaining the economic viability of farming operations, protecting farmers' investments in seeds, labour, and resources.

When applying crop protection products to a crop in a field, several considerations must be taken into account to ensure efficacy, sustainability, and safety.

The choice of crop protection products should be based on the specific pests, diseases, or weeds to be controlled, taking into account the crop species, growth stage, and the local ecosystem.

Timing and methods of application are critical to maximizing the effectiveness of crop protection products while minimizing their impact on non-target organisms and the environment. This involves understanding the life cycles of pests and diseases and applying products at optimal times.

The potential for pests and diseases to develop resistance to crop protection products necessitates strategies for resistance management, such as rotating crop protection products with different modes of action and integrating non-chemical control methods.

It is imperative to consider the environmental impact of crop protection products, including their potential effects on soil health, water quality, non-target organisms, and biodiversity. Crop protection products should be selected and applied in a manner that minimizes environmental risks.

Compliance with local and international regulations governing the registration, use, and disposal of crop protection products is essential to ensure the safety of food products and the environment.

### SUMMARY

The present disclosure addresses these issues.

In a first aspect, the present disclosure relates to a computer-implemented method comprising:
- providing a digital field passport, wherein the field passport specifies an agricultural field for the cultivation of a crop,
- receiving and/or determining infestation information about an acute or imminent infestation of the field and/or the crop with a harmful organism,
- determining and/or selecting a crop protection product based on the infestation information,
- providing a digital product passport, wherein the product passport specifies how the crop protection product is to be used,
- generating an application instruction based on the product passport, and the field passport, whereby the application instruction specifies how the crop protection product is to be used in the field to control the harmful organism,
- outputting the application instruction and/or storing the application instruction in a data storage and/or transmitting the application instruction to a separate computer system.

In another aspect, the present disclosure provides one or more computer systems, each comprising:
a processing unit; and
a memory storing a computer program configured, when executed by the processing unit, to cause the one or more computer systems to perform the following:
   - providing a digital field passport, wherein the field passport specifies an agricultural field for the cultivation of a crop,
   - receiving and/or determining infestation information about an acute or imminent infestation of the field and/or the crop with a harmful organism,
   - determining and/or selecting a crop protection product based on the infestation information,
   - providing a digital product passport, wherein the product passport specifies how the crop protection product is to be used,
   - generating an application instruction based on the product passport, and the field passport, whereby the application instruction specifies how the crop protection product is to be used in the field to control the harmful organism,
   - outputting the application instruction and/or storing the application instruction in a data storage and/or transmitting the application instruction to a separate computer system.

In another aspect, the present disclosure provides an infrastructure comprising:
- a field management system, wherein the field management system is configured to
   ∘ provide a digital field passport, wherein the field passport specifies an agricultural field for the cultivation of a crop,
   ∘ receive and/or determine infestation information about an acute or imminent infestation of the field and/or the crop with a harmful organism, and
   ∘ determine and/or select a crop protection product based on the infestation information,
- a product management system, wherein the product management system is configured to provide a digital product passport for a crop protection product, wherein the product passport comprises application rules for an application of the crop protection product,
- an application planning system, wherein the application planning system is configured to generate machine-readable instructions for the application of the crop protection product in the field based on the product passport and the field passport,
- an application device, wherein the application device is configured to execute the machine-readable instructions thereby applying the crop protection product to the field and/or the crop.

### BRIEF DESCRIPTION OF THE DRAWINGS

Fig. 1 schematically shows an embodiment of the infrastructure of the present disclosure.
Fig. 2 illustrates a computer system according to some example implementations of the present disclosure in more detail.

### DETAILED DESCRIPTION

The aspects of the present disclosure will be more particularly elucidated below, without distinguishing between the aspects (method, system, infrastructure). Rather, the elucidations that follow are intended to apply by analogy to all aspects, irrespective of the context (method, system, infrastructure) in which they occur. In other words, characteristics described in relation to one aspect also apply analogously to all other aspects.

Where steps are stated in an order in the present description or in the claims, this does not necessarily mean that this disclosure is limited to the order stated. Instead, it is conceivable that the steps are also executed in a different order or else in parallel with one another, the exception being when one step builds on another step, thereby making it imperative that the step building on the previous step be executed next (which will however become clear in the individual case). The stated orders thus constitute exemplary embodiments.

Some implementations of the present disclosure will be described more fully hereinafter with reference to the accompanying drawings, in which some, but not all implementations of the disclosure are shown. Indeed, various implementations of the disclosure may be embodied in many different forms and should not be construed as limited to the implementations set forth herein; rather, these example implementations are provided so that this disclosure will be thorough and complete, and will fully convey the scope of the disclosure to those skilled in the art.

Unless defined otherwise, all technical and scientific terms used herein have the same meaning as commonly understood by one of ordinary skill in the art.

As used herein, the articles "a" and "an" are intended to include one or more items and may be used interchangeably with "one or more" and "at least one." As used in the description and the claims, the singular form of "a", "an", and "the" include plural referents, unless the context clearly dictates otherwise. Where only one item is intended, the term "one" or similar language is used. Also, as used herein, the terms "has", "have", "having", or the like are intended to be open-ended terms. Further, the phrase "based on" is intended to mean "based at least partially on" unless explicitly stated otherwise. The term "A or B" can have the following meanings: "A", "B", "A and B".

The present disclosure provides, among other things, means for the effective and/or efficient and/or safe use of a crop protection product in an agricultural field.

The term "crop protection product" is understood to mean a product that serves to protect crops and/or crop products from harmful organisms and/or prevent the effect thereof, and/or to destroy unwanted plants (e.g., weeds) and/or parts of plants. Examples of crop protection products are herbicides, fungicides, and other pesticides (e.g., insecticides, nematicides, molluscicides and the like).

The term "agricultural field" (briefly referred to as "field") is understood to mean a spatially delimitable region of the surface of the Earth under agricultural cultivation. Such a field is usually planted with crops that may be supplied with nutrients and/or harvested. The field can also be or comprise a greenhouse. The field can also be a or comprise foil tunnel. The field can also be a plantation. The field can also be an orchard. The field can also be a pasture. The field can also be a forest. The field can also be an area in which aquaculture is practiced.

The term "crop" is understood to mean a plant which is specifically grown as a useful plant by human intervention. A "crop" refers to any plant that is intentionally grown and cultivated by humans for food, feed, fiber, timber, fragrance, medical, sanitary and/or other economic purposes. These plants are usually specifically selected and managed to produce a yield or harvest, and they can include a wide variety of species such as grains, fruits, vegetables, oilseeds, and fiber crops. Parts of the crop being grown may be suitable for human and/or animal consumption. Ornamental plants and algae also fall under the term "crop". The term "crop" also includes seeds that are sown to allow a plant to grow.

**In** an embodiment of the present disclosure, the term "crop" also includes cover crops. A "cover crop" is a plant that is planted primarily to manage soil erosion, fertility, quality, water, weeds, pests, diseases, biodiversity, and/or wildlife. Cover crops are usually not grown for direct harvest but are instead used to benefit the soil and/or subsequent crops. They are typically planted during off-season periods and/or in between regular crop plantings. Cover crops can help prevent soil erosion, improve soil health, increase organic matter, suppress weeds, and/or reduce the need for synthetic fertilizers and/or pesticides. Additionally, they can enhance biodiversity, provide habitat for beneficial insects, and/or contribute to overall sustainable agricultural practices. Common cover crops include legumes like clover and vetch, grasses like rye and oats, and various other species depending on the specific agricultural goals and/or local conditions.

In a first step, a digital field passport is provided. The digital field passport specifies a field for the cultivation of crops.

Just as a person's passport provides information about that person, a field passport provides information about a field. Usually, the field passport is suitable for uniquely identifying a field, i.e. the information in the field passport can be clearly assigned to a field and/or a field can be identified using the field passport.

The field passport is a compilation of information about a field in digital form. Information stored in the field passport that characterizes the field is also referred to in this disclosure as "field information".

The term "digital" means that the passport can be read and/or interpreted and/or processed by a machine, e.g. a computer system.

The term "processing" refers to the known electronic data processing (EDP) procedures.

The field passport usually indicates where the field is located.

The location of a field may be specified, for example, using geocoordinates. Such geocoordinates may indicate at least one point in the field or at the edge of the field. Such geocoordinates may specify field boundaries, i.e., the boundaries that separate an agricultural field from its surroundings. Preferably, field information indicates where the field begins and where it ends, using geocoordinates, for example.

The field passport may include topographic information about the field.

"Topographic information" refers to data related to the physical and natural features of the field's surface. This includes details about the elevation, slope, aspect, and/or contours of the terrain.

The field passport may include topological information.

"Topological information" refers to data related to the spatial relationships and connectivity of features in the field. This includes information about the arrangement, adjacency, and/or connectivity of agricultural sub-areas, water bodies, infrastructure, and/or other landscape elements.

The field passport may include information about the type(s) of soil in the field.

"Soil types" may be classified based on their physical and/or chemical properties, which significantly influence their suitability for different crops and agricultural practices. Some of the primary soil types include: sandy soil, clay soil, loamy soil, silt soil, peaty soil, chalky soil, silty clay soil.

The field passport may include further information about the soil in the field, such as soil texture, pH, organic matter content, nutrient levels, cation exchange capacity, soil structure, water holding capacity, soil drainage characteristics, and/or soil depth.

Information about the soil may also include information about the type and/or quantity of living organisms (e.g., worms and/or microorganisms and/or fungi) in the soil.

Information on the soil can be obtained from soil samples, for example. Soil samples can be analysed in a laboratory and/or on site (in the field) to determine the soil type and/or soil properties.

Information on the soil may be obtained from one or more sensors located in the field, such as soil moisture sensors, soil nutrient sensors, soil pH sensors, soil salinity sensors, soil temperature sensors and/or other/further sensors.

Field information may include information about which crops were previously grown in the field. It is possible, for example, that a crop rotation was carried out in the field. "Crop rotation" refers to the practice of systematically planting different crops in the same field over a sequence of growing seasons. This method involves alternating the types of crops grown in a specific field to achieve various agronomic, economic, and/or environmental benefits. Crop rotation aims to improve soil health, manage pests and/or diseases, and/or optimize nutrient utilization. By rotating crops, farmers can disrupt pest and/or disease cycles, reduce soil erosion, enhance soil fertility, and/or minimize the need for chemical inputs such as fertilizers and/or pesticides. Additionally, crop rotation can contribute to sustainable agricultural practices by promoting biodiversity and/or reducing the risk of soil depletion.

Field information may include climate information. Such climate information may indicate the mean (e.g., arithmetic average), minimum, and/or maximum temperatures, pressures, humidities, precipitation, sunshine duration, and/or sunshine intensity experienced in the field in past months and/or years.

The field passport (as well as the crop passport and any other information captured/collected when applying a crop protection product and/or preparing such application and/or documenting such application) can contain static and dynamic information.

Static information is information that does not change significantly over the course of a growing season. Static information includes, for example, the field location, and/or the soil type.

Dynamic information is information that changes significantly over the course of a growing season. Dynamic information includes, for example, biomass, soil temperature and soil moisture.

Dynamic information may include historical information, e.g. information on the field from the last days, weeks, months and/or years. Dynamic information may include information from the last growing season. Dynamic information may include current information, i.e. information that is not older than an hour, several hours, a day, several days or a week at the time of provision. Dynamic information may include future information, i.e. forecasts for the next day or days or weeks or months.

Dynamic values may include statistical values that characterize the field over a defined period of time, such as a mean value, a median, a mode, a variance, a standard deviation, a maximum, a minimum. The defined period of time may be one hour and/or several hours, one day and/or several days, one week and/or several weeks, one month and/or several months, one year and/or several years.

The dynamic information may include time-resolved data, e.g. a temperature profile over a defined period of time and/or a humidity profile over a defined period of time. The time-resolved data may include historical values and/or current measured values and/or predicted values. The values may include values at time intervals ranging from milliseconds to days.

Dynamic information may be captured with the aid of sensors, which can be located in and/or above the field. One or more sensors may be present in the field that measure field information such as soil temperature, air temperature, soil moisture, humidity, air pressure and/or the like and transmit the measured values to the computer system of the present disclosure (e.g., via a network) at defined times and/or upon defined events. Air pressure, air temperature and humidity can, for example, be recorded at a defined distance from the ground (e.g., one meter).

Field information may also be collected by satellites and/or drones and/or airplanes and/or robots and/or sensors on agricultural machinery moving above and/or through the field.

Static and/or dynamic field information may be obtained using remote sensing. "Remote sensing" refers to the use of various technologies, such as satellites, drones, and/or aircraft, to collect information about the Earth's surface without direct physical contact.

Remote sensing can assess the health and vigour of crops by measuring factors such as chlorophyll content, leaf area index, and biomass, which can indicate plant stress, nutrient deficiencies, and/or disease.

Remote sensing can track the growth stages of crops, providing insights into development, maturity, and potential yield estimates. Remote sensing data can contribute to yield prediction models by monitoring crop conditions and growth patterns.

Remote sensing can estimate soil moisture levels, helping farmers optimize irrigation practices and water management. Remote sensing can help identify areas of water stress in crops, allowing for targeted irrigation strategies.

Remote sensing can provide detailed information about the types of crops being grown, as well as changes in land use patterns over time.

Remote sensing can identify areas of potential pest and/or disease infestation by detecting changes in plant reflectance and health indicators.

Remote sensing can assess environmental factors such as erosion, deforestation, and habitat loss.

Field information may be obtained from one or more databases, such as the Soil Survey Geographic Database (SSURGO).

Field information may include information about the environment of the field, also referred to as "environmental information" in this disclosure.

Environmental information may indicate whether there is a body of water near the field and/or how far the field is from the body of water. Environmental information may indicate what type of water body it is.

Environmental information may indicate whether there is a nature reserve and/or a groundwater protection area in the vicinity of the field and/or how far the field is from the nature reserve and/or groundwater protection area.

Environmental information may indicate what vegetation is present in the vicinity of the field.

Environmental information may indicate whether there are roads and/or inhabited areas in the vicinity of the field and/or how far the field is from roads and/or inhabited areas.

Environmental information may indicate which soil types are adjacent to the field and/or which properties the adjacent soil has.

Environmental information may indicate whether animals are kept and/or present in the vicinity of the field and/or at what distance from the field. Environmental information may also indicate what type of animals are involved.

Environmental information may include protection goal information, wherein the protection goal information comprises minimum, maximum, and/or preferred thresholds, boundaries, limitations, restrictions required by a regulatory authority to protect humans, animals, non-target organism, and/or the environment.

Environmental information may include neighbouring farm information, wherein the neighbouring farm information comprises information on one or more crop protection products applied to neighbouring areas and/or farming practices used in neighbouring areas.

Environmental information may also be or include any information that can also be collected for the field, such as topology, topography, climate, vegetation, etc.

The field passport may be generated at least in part based on information that can be entered into the computer system of the present disclosure by a user via input means (e.g. a keyboard, a computer mouse, a touch pad, a touch-sensitive display, a microphone and/or similar devices).

The computer system may be configured to prompt the user to enter field information into the computer system. Based on the information entered by the user, the computer system may be configured to obtain further field information, for example from one or more databases, sensors and/or devices.

For example, the computer system of the present disclosure may be configured to prompt the user to specify the location of the field. The computer system of the present disclosure may be configured to display a virtual map (e.g. on a monitor) and prompt the user to mark one or more points on the virtual map (digital map) that lie within the field or lie on the edge of the field and/or to draw field boundaries, e.g. using a computer mouse.

The computer system may be configured to obtain further field information based on the geocoordinates of the field, e.g. topological, topographical, climate and/or environmental information.

It is also possible that the field passport has already been generated in the past and is stored in a data storage. It is possible that the computer system of the present disclosure is configured to load a field passport from a data storage.

It is possible that the computer system is configured to prompt a user to specify a field. The computer system may be configured to display a list of fields, for example, on a monitor, for which a field passport is stored in the data storage. The computer system may be configured to prompt the user to select one of the displayed fields. The computer system may be configured to load the field passport of the selected field from the data storage.

Once a field is specified (e.g. by selecting a field from a list or by drawing field boundaries), the computer system may be configured to retrieve further field information and/or update field information (e.g. based on field information collected by sensors in and/or above the field).

The field passport may comprise a digital map of the field. A digital map of a field, often referred to as a digital field map, is a geospatial representation of agricultural land that usually incorporates various data layers to provide insights into the field's characteristics and/or conditions. These maps may be generated using technologies such as Geographic Information Systems (GIS), remote sensing, and Global Positioning System (GPS) data. The digital map may also show area(s) around the field (e.g. adjacent areas).

In a further step, a digital crop passport may be provided. The digital crop passport may be part of the digital field passport or a separate passport. The crop passport specifies a crop grown or to be grown in the field. The crop passport may also specify seeds.

It is possible that there is a crop passport for individual plants, e.g. for individual trees in an orchard. It is possible that there is a crop passport for a group of plants, listing the individual specimens that belong to the group.

It is possible that there is a crop passport for a field or part of a field that covers all plants grown or to be grown in the field or part of the field.

It is possible that there is a crop passport for a greenhouse or part of a greenhouse that covers all plants grown or to be grown in the greenhouse or part of the greenhouse.

It is possible that there is a crop passport for a foil tunnel or part of a foil tunnel that covers all plants grown or to be grown in the foil tunnel or part of the foil tunnel.

It is possible that several fields or greenhouses or foil tunnels are combined in one crop passport.

The crop passport includes information that characterizes the crop that is or will be grown in the field. This information is also referred to in this disclosure as "crop information".

Crop information may include information on the plant species and/or the plant variety. Crop information may include information on whether and/or how the crop has been genetically modified. Crop information may include information about the stage of development of the crop and/or when it was planted or sown and/or whether and/or when it was fertilized and/or whether and/or when it was irrigated.

Crop information may specify the seed sown or to be sown on the field.

Crop information may include information on whether the crop has already been treated with one or more crop protection products and/or with which crop protection product(s) the crop has been treated and/or when it has been treated with one or more crop protection products and/or how it has been treated with one or more crop protection products.

Crop information may include information on the biomass present in the field.

Crop information may include a vegetation index, for example. "Vegetation indices" are numerical measures usually derived from remote sensing data that help to quantify various aspects of vegetation health, density, and physiological condition. These indices are often calculated using the spectral reflectance properties of vegetation, typically obtained through satellite or aerial imagery. Vegetation indices provide information about plant growth, health, and overall vitality. Common vegetation indices include the Normalized Difference Vegetation Index (NDVI), which is widely used to monitor plant health and assess vegetation coverage. Another important index is the Enhanced Vegetation Index (EVI), which provides improved sensitivity in high biomass regions and better performance in areas with varying atmospheric conditions. Additionally, the Soil-Adjusted Vegetation Index (SAVI) is used to minimize the influence of soil brightness in the assessment of vegetation cover.

Crop information may be provided by the user of the computer system of the present disclosure, for example by entering the information into the computer system.

The computer system may be configured to obtain additional crop information based on the information provided by the user, for example by reading the additional crop information from one or more databases, which may be components of the computer system of the present disclosure or may be connected to the computer system via a network.

Crop information may also be identified and/or collected by sensors/monitoring devices (e.g., remote sensing via satellite, drones, airplanes, field sensors).

In a further step, infestation information is received and/or determined.

"Infestation information" is information about an existing infestation of the field with a harmful organism or an impending infestation of the field with a harmful organism or a defined risk of infestation of the field with a harmful organism or an exceedance of a defined infestation threshold.

A "harmful organism" is an organism that occurs during the cultivation of crops and can damage the crop, negatively affect the crop's harvest and/or compete with the crop for natural resources. Examples of such harmful organisms are weeds, animal pests such as beetles, caterpillars and worms, fungi and pathogens (e.g., bacteria and viruses). Even if viruses are not classified as organisms from a biological point of view, they are still be included under the term harmful organism in this disclosure.

The term "receiving" is to be interpreted broadly and includes any means capable of providing infestation information (or any other information/data) for further processing by the computer system(s) of the present disclosure.

The term "receiving" may mean transmitting data from one computer system to another computer system. The term "receiving" may mean transmitting data from a sensor such as a camera to a computer system. The term "receiving" may mean uploading of data into a data memory of a computer system, e.g. by a user. The term "receiving" may mean retrieving data from a data storage; the data storage may be a component of and/or connected to the computer system, for example via a network.

Infestation information can be obtained by inspecting the field and/or the crops grown in it. Infestation information can be obtained by sensors in the field and/or by sensors on agricultural machinery and/or robots moving through the field and/or by remote sensing.

It is possible that the presence of a harmful organism is detected directly and/or based on damage caused by the harmful organism and/or on the basis of traces of the harmful organism.

An emergence of an infestation and/or a defined risk of an infestation can be determined based on weather information and/or infestations in the surrounding area.

Infestation information may be entered into the computer system of the present disclosure by a user and/or transmitted by sensors (e.g. via a network) and/or transmitted by a separate computer system.

Infestation information may be provided by an infestation model.

An "infestation model" (also known as pest and/or disease model) is a mathematical and/or computational representation used to predict and/or analyse the dynamics of harmful organisms in agricultural systems. These models help in understanding how harmful organisms spread, establish, and/or interact with their environment, including crops and beneficial organisms.

The infestation model may determine a probability that the field and/or the crops grown in the field are infested with a harmful organism.

The infestation model may forecast the timing and/or severity of pest and/or disease outbreaks, allowing farmers and agronomists to implement management strategies proactively.

The infestation model may help in assessing the risks associated with an infestation and the potential economic impact on crop yield.

The infestation model may determine the probability and/or timing and/or severity of an infestation based on, for example, weather information and/or crop information (e.g. the crop passport) and/or field information (e.g. the field passport).

The infestation model may be stored in a data storage of the computer system of the present disclosure. The infestation model may be stored in a data storage of a separate computer system that is connected to the computer system of the present disclosure (e.g. via a network).

The infestation information indicates a need for action. Receiving the infestation information signals that something must or should be done to prevent or reduce damage and/or to prevent or reduce a loss of quality.

The computer system of the present disclosure may be configured to contact one or more separate computer systems and/or databases at defined times and/or in defined time intervals, e.g. via a network, to check whether infestation information is available.

The computer system of the present disclosure may be configured to check at defined times and/or in defined time intervals using the infestation model whether infestation information is present, i.e. whether there is an infestation of the field with a harmful organism or an impending infestation of the field with a harmful organism or a defined risk of infestation of the field with a harmful organism or an exceedance of a defined infestation threshold.

The computer system of the present disclosure may be configured to receive and/or retrieve sensor data at defined times and/or in defined time intervals and to check whether infestation information is present.

The computer system of the present disclosure may be configured to determine, based on the infestation information, one or more crop protection products that can be used to control the harmful organism and/or prevent its spread and/or limit the damage caused by the harmful organism.

The one or more crop protection products may be used to control the infestation. Controlling the infestation may mean, for example, preventing, mitigating, delaying and/or eliminating the infestation.

If the harmful organism is a weed, for example, the computer system may be configured to identify one or more herbicides that are suitable for controlling the weed, based on the information that the harmful organism is a weed and/or which weed it is.

If the harmful organism is a pest species (e.g., an insect), for example, the computer system may be configured to identify one or more pesticides (e.g., insecticides) that are suitable for controlling the pest species, based on the information that the harmful organism is a pest species and/or which pest species it is.

If the harmful organism is a fungus, for example, the computer system may be configured to identify one or more fungicides that are suitable for controlling the pest species, based on the information that the harmful organism is a fungus and/or which fungus it is.

It is possible that the computer system of the present disclosure has access to a list in which, for various harmful organisms, one or more crop protection products suitable for combating the respective harmful organism are listed.

In an embodiment of the present disclosure, the computer system of the present disclosure uses further information for determining the crop protection product, such as crop information and/or field information and/or device information. For example, it is possible that only certain crop protection products are approved for a particular region and/or season and/or crop. The computer system of the present disclosure may be configured to use the field information and/or crop information to check which crop protection product(s) are available to control the infestation. For example, a crop protection product may have requirements for the application device. In other words, it is possible that a crop protection product can only be applied with a specific application device or type of application device. The computer system of the present disclosure may be configured to determine which crop protection products can be applied with the application device available to the user (e.g. farmer) based on the device information.

It is also possible for the user to specify and/or select a crop protection product that the user wants to use to control the infection. The user can do this by entering the corresponding name of the crop protection product and/or the name of an active ingredient into the computer system of the present disclosure and/or by selecting such a name from a menu. The user can capture a machine-readable code (e.g., a QR code or an identifier stored in an RFID tag) applied to a packaging and/or container of the crop protection product using a scanner or camera or RFID reader, and thus determine the crop protection product.

In a further step, a digital product passport is provided for each crop protection product that has been determined/identified.

The product passport includes information that characterizes the crop protection product. The product passport specifies the crop protection product and indicates how the crop protection product is to be used. This information is also referred to in this disclosure as "product information".

Product information may contain a name and/or a code (e.g., an alphanumeric code) that has been assigned to the crop protection product. Such information that makes it possible to identify a crop protection product is also referred to in this disclosure as a "product identifier".

Product information may contain information on the composition of the crop protection product, e.g., on active and/or inactive ingredients contained. Product information may contain information on the quantities (e.g., concentrations) of ingredients (e.g., active ingredients) of the crop protection product.

Product information may contain safety instructions for handling the crop protection product. Product information may contain information on the properties of the crop protection product and/or its components, such as toxicity, composition (e.g., solid, liquid, gas, suspension, mixture, etc.) and/or the like.

Product information specifies how the crop protection product is to be used ("application rules").

The application rules may include provisions specifying where and/or when the crop protection product may and/or may not be used.

The application rules may contain information about when (at which time (e.g., day(s) or time of a day)) the crop protection product may be applied.

The application rules may contain information about when (at which time (e.g., day(s) or time of a day)) the crop protection product should preferably be applied.

The application rules may contain information about when (at which time (e.g., day(s) or time of a day)) the crop protection product should preferably not be applied.

The application rules may contain information about when (at which time (e.g., day(s) or time of a day)) the product must not be applied.

The application rules may contain information on the time interval that should or must be observed between two consecutive applications of the crop protection product.

The application rules may specify the time interval to be observed between a previous application of the same crop protection product and/or another crop protection product.

The application rules may specify the time interval to be observed between the application of the crop protection product and the harvest of the crop.

The application rules may include provisions specifying the minimum quantities (e.g., to avoid resistance) and/or the maximum quantities of the crop protection product that must be adhered to.

The application rules may include provisions that specify distances that must be maintained from certain areas (e.g., water body, field boundary, populated area, street, farmed animals) when applying the crop protection product.

The application rules may contain information on the quantities of the crop protection product that may be applied. The quantities may be the same for different sub-areas or may vary within the field.

The application rules may contain information on how the crop protection product must, must not, can and/or should be applied.

The application rules may contain information on where (in which part(s) of the field) the crop protection product must, must not, can and/or should be applied.

The application rules may specify with which other crop protection products the crop protection product may be applied together and with which it may not.

The application rules may contain information on the circumstances under which the crop protection product should not or must not be applied. The circumstances may relate to weather conditions (e.g., no application during rain and/or during rain on one or more subsequent days; no application on days when solar radiation exceeds a certain threshold to avoid phototoxicity; no application when a specified wind speed is exceeded; no application on days when beneficial insects and/or certain animal species are present in the target area and/or the probability of their presence is above a certain threshold).

The application rules may specify which application technique is to be used to apply the crop protection product. The application technique may specify the target, e.g. foliar application, soil application, seed application, basal bark treatment. The application technique may specify the form of application, such as spray application, drip irrigation, granular application. The application technique may specify the application route, such as aerial application, application using a boom sprayer, airblast spraying, broadcast spreading, drop spreading.

The application rules may specify the required precision of the application. The term "precision" refers to the accuracy and/or specificity with which the crop protection product is applied to maximize its effectiveness, and minimize waste, environmental impact, and harm to non-target organisms.

Precision may mean spatial precision. Spatial precision involves applying a crop protection product exactly where it is needed within a field, down to very specific zones and/or locations. This contrasts with blanket applications over entire fields, regardless of varying conditions within those fields. The following degrees (levels) of spatial precision may be distinguished: uniform application, zone application, site-specific application, targeted application (e.g., only the leaves or even only leaves showing symptoms of a disease).

Precision may mean temporal precision. Temporal precision focuses on the timing of applications, ensuring that crop production products are applied at the most effective moments in the crop's growth cycle and/or in the lifecycle of pests and/or diseases. The goal is to optimize the effectiveness of the application by aligning it with biological and/or environmental conditions.

Precision may mean dosage precision. Dosage precision refers to the adjustment of the amount of a crop protection product applied to match the specific needs of different parts of a field. It's about applying the right amount - not too much or too little - to meet the precise requirements for effective treatment and/or infestation control.

The application rules may define the weather conditions under which the crop protection product may or may not be used.

The application rules may include information that is specific to the crop protection product. The application rules may also include information that applies to several crop protection products. These general application rules may be protection goals and/or based thereon.

The term "protection goal" refers to specific objectives and/or resulting rules set by regulatory bodies and/or governments aimed at safeguarding environmental quality, biodiversity, and/or ecosystem health while allowing for agricultural productivity. These goals guide the assessment, approval and use of crop protection products to ensure that they do not adversely affect non-target organisms, water quality, soil health, and/or overall ecosystem integrity.

An example of such a protection goal is biodiversity conservation, i.e. ensuring that crop protection products do not harm non-target species, such as beneficial insects (like pollinators), birds, and/or aquatic organisms. This may involve setting limits on the use of certain chemicals in areas rich in biodiversity.

Another example of a protection goal is water quality protection, i.e. establishing guidelines to prevent agricultural runoff that could contaminate water bodies with crop protection products and/or nutrients. This may include buffer zones near waterways or restrictions on application rates.

Another example of a protection goal is soil health maintenance, i.e. promoting practices that protect soil organisms and structure, which are crucial for nutrient cycling and soil fertility. This may involve regulations on the use of certain synthetic fertilizers and their impact on soil microbiomes.

Another example of a protection goal is reduction of chemical residues, i.e. setting maximum residue limits for crop protection products (e.g. on food crops) to ensure consumer safety and/or minimize environmental impact.

Another example of a protection goal is pollinator protection, i.e. implementing measures to protect pollinator populations from harmful effects of crop protection products, such as restricting the use of certain products during flowering periods of crops.

Another example of a protection goal is an integrated pest management promotion, i.e. encouraging practices that reduce reliance on chemical crop protection products by promoting biological control methods and/or cultural practices that enhance pest resistance.

Such protection goals may differ for various regions and/or countries. They may be part of the application rules and/or further rules that need to be considered when creating an application instruction (see below).

The digital product passport may be a product label, include it or replace it. The term "product label" as it is used herein refers to information on the permitted (i.e., authorized, approved) use of a crop protection product. Usually, the product label is the prerequisite for a crop protection product to be used. The crop protection product may not (i.e., must not) be used without such a product label.

A prior art product label (i.e., a traditional/classic/conventional product label) is usually a document that is attached to the packaging of a crop protection product and/or accompanies the crop protection product and serves as an important source of information for users.

The digital product passport may contain a digital certificate (e.g., a digital signature) that certifies the authenticity of the product passport, e.g., to prevent counterfeiting and/or tampering.

The digital product passport may include a certificate stating that the crop protection product has official authorization for a use (application).

The digital product passport may contain a validity date. The validity date may specify a date until which the digital product passport is valid, i.e., until which date the crop protection product may be used in accordance with the application rules.

The digital product passport may contain an expiration date, wherein the expiration date may specify the date of expiration of the authorization.

**In** an embodiment of the present disclosure, all or some product information, for example the application rules or a part thereof, is present in the digital product passport in the form of rules as code.

"Rules as code" is a concept that involves the translation of legislation, regulations, policies, and/or any rules-based content into machine-readable code that can be processed and understood by computer systems. This approach seeks to bridge the traditional gap between the often complex, nuanced language used in legal texts and the precise, unambiguous nature required for coding. By converting rules into a format that computers can interpret, rules as code aims to automate and streamline the application, compliance, and enforcement of these rules, making them more accessible, transparent, and efficient.

Translating product information, e.g. application rules, into rules as code may involve converting instructions, warnings, regulations, and/or regulatory compliance information into a machine-readable format that can be automatically processed and applied by digital systems.

Some or all actionable and/or rule-based product information may be translated into rules as code. This includes, but is not limited to, usage rates, application timing, safety precautions, target crops and/or pests, environmental restrictions, and/or any other conditions for use. Actionable and/or rule-based product information may be broken down into discrete rules that can be coded. For example, a rule might specify that a particular crop protection product should not be applied if the wind speed exceeds a certain threshold to avoid drift, or it might detail the minimum interval between application and harvest for a specific crop.

Usually, data elements to which rules refer are standardized. This usually includes units of measurement (e.g., litres per hectare, wind speed in km/h), crop names, pest types, and/or any other variables.

For generating the code, a programming language or rule engine is identified and/or selected that is compatible with the intended digital platform (e.g. infrastructure). The code is usually structured to take input data (e.g., current wind speed, crop type, planned application rate) and output a decision and/or action (e.g., whether application is advisable, adjusted application rate).

The digital product passport may be continuously updated and thus adapted to changing conditions (both of a legal nature and in relation to the crop protection product).

The digital product passport and/or product information may be provided by the manufacturer of the crop protection product.

The digital product passport and/or product information may be provided by a regulatory authority. It is possible that some of the product information comes from the manufacturer and some from a regulatory agency. It is possible that the digital product passport and/or product information is provided by a manufacturer and certified by a regulatory authority. It is possible that protection goals and/or rules resulting therefrom and/or relating thereto are provided by a regulatory authority.

The manufacturer/regulatory authority may store product information and/or a product passport and/or protection goals on a separate computer system and/or database from where it can be obtained.

It is also possible that product information and/or a product passport and/or protection goals are stored on a data storage device of the computer system of the present disclosure.

It is possible that different crop protection products have been determined/identified and that a selection is made based on the product passports of the different crop protection products.

In a further step, an application instruction is generated based on the product passport, the field passport, and optionally the crop passport. It is possible that the application instruction is based on further information, such as infestation information and/or weather information and/or protection goals.

The application instruction may also be based on a digital device passport.

A "digital device passport" specifies an application device and/or type of application device. The information contained in the device passport and/or provided by the device passport is also referred to in this disclosure as "device information".

The device passport may contain a device identifier, such as the manufacturer's name, model number, and/or serial number.

The device passport may contain technical information about the application device, such as its capacity, dimensions, and/or operational parameters (e.g., pressure settings, nozzle types).

The device passport may contain information on how the application device has been calibrated for specific applications, including flow rates and/or coverage patterns.

The device passport may contain a documentation of maintenance and/or servicing history, such as dates of service, types of repairs performed, and/or parts replaced.

The device passport may contain compliance information, such as records of compliance with relevant regulations and/or standards, including safety certifications and/or environmental impact assessments.

The device passport may contain a usage history, such as data on the device's operational history, including types of crop protection products applied, application rates, and/or geographical locations of use.

The device passport may contain owner and/or operator information, such as information about the current owner and/or operator, including contact information and/or training certifications related to safe application practices.

The device passport may contain information on the environmental measures taken to minimize drift and runoff, as well as any integrated pest management practices employed.

The device passport may contain connectivity information, such as information on any digital features of the device, such as GPS tracking, telemetry data, and/or integration with farm management software.

The device passport may be used to generate an application instruction for a specific application device or type of application device and/or to specify a general application instruction for a specific application device or type of application device.

The device passport may contain one or more certificates that validate the compliance and/or safety of the application device.

The device passport may contain a calibration certificate. Such a calibration certificate may verify that the application device has been calibrated according to specific standards and/or guidelines, ensuring accurate and effective application of crop protection products.

The device passport may contain a compliance certificates. Such a compliance certificate may confirm that the device meets regulatory requirements set by agricultural and/or environmental authorities. This may include certifications related to safety, emissions, and/or environmental impact.

The device passport may contain a manufacturer's certificate of conformity. Issued by the manufacturer, this certificate may indicate that the device adheres to relevant industry standards and/or specifications.

The device passport may contain a safety certification that demonstrates the device has passed safety tests, ensuring it is safe for operators and/or the environment. This could include certifications from recognized safety organizations.

The device passport may contain a training certificate, i.e. a documentation that confirms the operator has completed necessary training related to the safe and/or effective use of the application device.

The certificate(s) may be digital. The certificate(s) may include a digital signature that allows the certificate(s) to be verified for authenticity and/or validity.

The device passport may be provided by the manufacturer and/or distributor of the application device.

It is also possible that the device passport is stored in a data memory of the application device and can be obtained from there.

The application instruction specifies how the crop protection product is to be applied in the field. The application rules may be understood as a framework that defines an option space for the application of the crop protection product. The product passport, field passport, optionally the device passport and optionally the crop passport (and optionally further information such as infestation information and/or weather information and/or protection goals) may provide parameters to narrow down the option space to situation-specific parameters.

The field passport specifies the field in which the product is to be applied. The crop passport specifies the crops that are or will be grown in the field. The device passport specifies the application device to be used to apply the crop protection product in the field and/or to the crop. The product passport contains information on how the crop protection product is to be used. The computer system of the present disclosure is configured to superimpose the field passport, the product passport, optionally the device passport and optionally the crop passport (and optionally further information) in order to determine how the crop protection product is to be used in the field in which the crops are or will be grown. The computer system is configured to bring together the various information to determine how to implement the instructions/regulations in the product passport so that they are specific to the field and the crop grown therein (and optionally also specific to the application device used).

The application rules in the product passport cover several scenarios and thus exhibit variability. These application rules are now applied by the computer system of the present disclosure to the specific case at hand (specified by the field passport, the product passport, optionally the device passport, optionally the crop passport, and optionally further information).

For example, it is possible that the application rate and/or time of application of a crop protection product depends on the amount of biomass and/or soil type and/or crop species and/or stage of development of the crop and/or soil moisture and/or soil temperature and/or field topography and/or field topology and/or the environment of the field. It is possible that the product passport specifies how large the application rate should be as a function of one or more of the parameters mentioned. The computer system of the present disclosure may determine the relevant parameters from the available information (e.g. field passport and/or crop passport), determine a minimum and/or maximum and/or average application rate for the field and makes this/these available in the form of an application instruction.

The application instruction may specify the amount of crop protection product to be applied to the field to control the harmful organism. The application instruction may include spatially resolved information indicating the quantities of crop protection product to be applied in different parts of the field.

The application instruction may comprise a digital map of the field. The digital map of the field may contain three-dimensional information about the field, e.g., contours, elevations, depressions, the height of crops and/or their lateral spread at different distances from the ground.

**In** an embodiment of the present disclosure, the application instruction comprises a digital map of the field, in which it is specified for sub-areas of the field which crop protection product and/or which quantity of a crop protection product an application device has to apply in the respective sub-area and/or how the crop protection product has to be applied. Such a digital map is also referred to as "application map" in this disclosure.

The application map may specify different quantities to be applied across the field, including rates and timing of application.

The application map may indicate areas where variable rate technology (VRT) is to be used to apply the crop protection product at different rates based on specific field conditions, such as soil type and/or crop health.

The application map may indicate specific zones within the field that may require targeted applications, e.g. based on pest pressure and/or crop needs.

The application instruction may include information on the distances that must be maintained from the field's boundaries. The distances may be the same for all field boundaries or may vary depending on the type of adjacent areas, for example.

The application instruction may contain information about the application method and/or application parameters to be observed.

As already mentioned, weather information can also be incorporated into the application instruction and/or used for its creation.

"Weather information" refers to data and forecasts related to atmospheric conditions for a specific place and time. It may encompass a wide range of variables that describe the state of the atmosphere, including temperature, humidity, precipitation (rain, snow, sleet, etc.), wind speed and/or direction, atmospheric pressure, cloud cover, and/or visibility. Weather information may also include more specialized data such as dew point, solar radiation, and/or occurrences of weather phenomena like fog, frost, thunderstorms, and/or severe weather warnings.

**In** the case of the present disclosure, the weather information relates to the location of the field and the time or times or one or more time periods for which an application of the crop protection product in the field is planned and/or allowed and/or possible.

Weather forecasts are usually based on information that is collected through various means, including weather stations, satellites, radar systems, and/or atmospheric sensors.

When applying crop protection products, weather conditions may have an impact on the effectiveness of the application and on the environment. Both current and forecasted temperatures can influence the efficacy of crop protection products. Some crop protection products may volatilize (turn into gas) at high temperatures, reducing their effectiveness and potentially causing harm to non-target areas. Low temperatures can also affect the absorption and effectiveness of some crop protection products. Wind can cause spray drift, where the crop protection product is carried away from the target area to non-target crops, water sources, and/or habitats, potentially causing damage and/or contamination. Both recent and forecasted rainfall may be critical. Rain shortly after application may wash off the crop protection product, reducing its effectiveness and leading to runoff, which may contaminate water bodies. Some crop protection products may require a certain amount of dry time to be absorbed effectively. High humidity may slow the evaporation of liquid applications, potentially increasing effectiveness for certain crop protection products. However, it can also increase the risk of fungal diseases in some crops. Low humidity might increase evaporation and reduce the effectiveness of the application. Presence of dew may affect the application in various ways, similar to rainfall and humidity. Dew may dilute the crop protection product and/or affect its adherence to plant surfaces, impacting effectiveness. Intense sunlight may increase the rate of evaporation of the crop protection product from leaf surfaces, reducing its effectiveness. Some crop protection products may also be broken down and/or degraded by strong sunlight. A temperature inversion occurs when the air near the ground is cooler than the air above it, which can happen under clear skies and calm winds, usually in the evening or early morning. During a temperature inversion, spray droplets may remain suspended in the air and travel long distances, leading to increased drift risk.

Weather conditions may therefore mean that a crop protection product can only be applied in certain periods and/or that distances to field boundaries must be adapted to the weather conditions and/or that special application techniques and/or application routes are necessary. In other words, the weather information may influence the application instruction.

The application instruction can be output (e.g., displayed on a screen or printed on a printer) and/or stored in a data memory and/or transmitted to a separate computer system. The application instruction may be transmitted to an application device.

It is possible that the application instruction includes options. For example, it is possible that the application instruction includes a time frame of several days, during which the application of the crop protection product should or can or must take place. It is possible that options are shown to a user (e.g. via a graphical user interface) and that the user can make a selection.

In an embodiment of the present disclosure, the computer system is configured to restrict the application instruction to the option(s) that a user specifies (e.g. via a selection and/or another user input).

In an embodiment of the present disclosure, the application instruction includes rules as code.

If the application rules of the product passport include rules as code, these rules can be adapted to the specific application of the crop protection product in the field based on the field passport, the product passport, optionally the crop passport and, optionally, further information (e.g. weather information and/or infestation information and/or protection goals). This may only require a concretization and/or specification of data elements and/or variables if the rules are already available in the product passport (with a certain degree of variability).

In an embodiment of the present disclosure, the application instruction comprises instructions (machine-readable instructions) that can be interpreted and implemented by a machine (e.g. an application device). Such machine-readable instructions are a specific form of rules as code. Such machine-readable instructions may be considered as a manifestation of a singular option, distilled on the basis of specific parameters provided by the field passport, the product passport, optionally the crop passport and, optionally, further information (e.g. weather information and/or infestation information and/or protection goals). Such machine-readable instructions may be specific to an application device or type of application device. In other words: the machine-readable instructions may be designed so that they can be implemented by an application device.

Examples of application devices are: boom sprayer, airblast sprayer, ATV (all-terrain vehicle) sprayer, UTV (utility vehicle) sprayer, drone (UAV: unmanned aerial vehicle), fogger, mist blower, self-propelled sprayer, irrigation system (chemigation).

It is also possible that the machine-readable instructions are generated based on the application instruction. For example, it is possible that the application instruction includes general instructions that must first be converted into machine-readable instructions so that they can be interpreted and implemented by a specific application device or type of application device.

It is also possible that the digital device passport is used to generate the application instruction and/or machine-readable instructions.

The machine-readable instructions may cause the application device to apply a defined amount of one or more crop protection products in the field, for example when the application device is in a defined location within the field.

The machine-readable instructions may cause an application device to move along a defined route through or over a field. The application device may be equipped with a GPS receiver. The GPS receiver may be used to determine the location of the application device. The location information may be used as input data for the machine-readable instructions to navigate the application device.

The machine-readable instructions may ensure that required distances to field boundaries are maintained. The machine-readable instructions may ensure that the appropriate and/or approved spray nozzles are used. The machine-readable instructions may ensure that crop protection products are only applied if this is intended according to the application instruction.

The machine-readable instructions may cause the application device to apply defined quantities of one or more crop protection products along the route.

The application can be site-specific, i.e. different crop protection products can be applied and/or different quantities of one or more crop protection products can be applied in different parts of the field and/or at different positions in the field.

The application device may be equipped with one or more sensors. Such a sensor may be, for example, a camera or include a camera. The sensor may provide data on the present biomass and/or present weeds and/or present infestation with a harmful organism. The data may serve as input data for the machine-readable instructions. Based on the data, the machine-readable instructions may select one or more crop protection products and initiate the application of such a selected crop protection product and/or define a quantity of one or more crop protection products and initiate the application of the defined quantity.

The application device may be equipped with a timer (clock) and/or have access to the time via a network (e.g. the mobile phone network).

The machine-readable instructions may cause a check whether the current time is within the time frame for which application of a crop protection product in the field is intended and/or permitted and/or possible.

The machine-readable instructions may cause a check whether the current time is within a time frame during which the application of a crop protection product in the field is not allowed. If application is not allowed, application can be refused and a corresponding message issued to a user.

The machine-readable instructions may cause a check whether an approval (for example in the form of a digital certificate) for the application of one or more crop protection products in the field is currently in effect. If such a permission is not present, the application may be denied, and a corresponding message may be issued.

The machine-readable instructions may cause a check whether the crop protection product in a tank of the application device matches the crop protection product for which an application is planned and/or intended and/or possible according to the application instruction. If the crop protection products do not match, the application may be denied, and a corresponding message may be issued.

In an embodiment of the present disclosure, the application process is documented. Such a documentation may record when and where which quantities of one or more crop protection products were applied. The conditions prevailing during application (e.g., weather conditions (e.g., wind direction, wind strength, air temperature, humidity, air pressure)) can be recorded in the documentation, too. The application method/application parameters used can be recorded in the documentation, too.

The information about the actual application may be provided by the application device, for example. A computer system of the application device may be configured to capture and document all machine-readable instructions executed by the application devices. This may also include error messages.

Furthermore, it is possible that one or more sensors of the application device provide application data. Various sensors are employed in modern agricultural machinery to capture data needed for documenting the application of crop protection products. Commonly used sensors include:
- GPS sensor for providing location data, allowing for accurate mapping of application areas and/or ensuring that products are applied only where needed.
- Flow meter used to measure the rate of liquid or granular product being applied, flow meters may help to ensure that the correct application rate is maintained.
- Pressure Sensor to monitor the pressure within the application system to ensure that the equipment is operating within the recommended parameters.
- Temperature and/or humidity sensors may capture environmental conditions during application, which may influence product effectiveness and/or safety.
- Wind speed and/or wind direction sensors may provide critical information to prevent drift and/or ensure safe application.
- Optical sensors may assess crop health and/or pest presence by analyzing reflected light, helping to inform targeted applications.
- Rate controller may monitor and adjust the application rate in real-time based on sensor inputs, ensuring precise delivery of crop protection products.
- Tilt and angle sensors may help to maintain the correct orientation of the application equipment, which may be important for uniform application.
- Camera system may be used for visual monitoring of fields, capturing images for analysis of crop conditions and/or pest infestations.
- Soil moistures sensor may provide context on conditions that may affect pest pressure and/or crop health.

Data loggers may collect and store data from various sensors, allowing for easy documentation and analysis of application events.

The information contained in the application documentation is also referred to in this disclosure as "application information".

Application information may contain location and route data, e.g. GPS coordinates of the application area, e.g. to ensure accurate mapping of where a crop protection product was applied.

Application information may contain the specific date and/or time of application for traceability and/or compliance with regulations.

Application information may contain information about the specific field and/or plot where the application took place, including field boundaries.

Application information may contain product information, e.g. details about the crop protection product used, including its name, active ingredient(s), formulation type, and/or manufacturer.

Application information may include the quantity of the crop protection product applied per unit area (e.g., liters per hectare or ounces per acre).

Application information may contain environmental conditions during application, such as temperature, humidity, wind speed, and/or direction and/or other/further weather information.

Application information may contain information about the machinery or equipment used for the application, including make, model, and/or settings.

Application information may contain operator information, e.g. details about the operator conducting the application, which may include their name and certification status.

Application information may contain data regarding the specific crops being treated and/or the pests or diseases being targeted.

Application information may contain total volume and/or weight of the crop protection product applied during the operation.

Application information may contain information about the application method, e.g. the technique used for application (e.g., spraying, granulating) and/or any specific settings related to the method.

Application information may contain post-application observations, i.e. any notes and/or observations made during and/or after the application, such as visible pest presence and/or crop condition.

The application documentation may contain all information/data that was used to generate the application instruction and/or the application instruction itself.

The application documentation may contain models (e.g., an infestation model) and/or model parameters that were used to generate the application rules and/or application instruction.

The application documentation may include product information from the product passport or the product passport itself.

The application documentation may include field information and/or environmental information from the field passport or the field passport itself.

The application documentation may include crop information from the crop passport or the crop passport itself.

The application documentation may include one or more infestation information.

The application documentation may contain weather information about the weather before and/or during and/or after the application of the crop protection product in the field.

The application documentation may include one or more information from the application rules or the application rules themselves.

The application documentation may include one or more information from the device passport or the device passport itself.

It is also possible that the application documentation includes references to the product passport, field passport, crop passport, device passport, application rules, application instructions and/or further information (e.g. in the form of links to data stores in which the respective passports and/or information are stored and from where they can be retrieved).

With the help of the application documentation, a farmer can prove that the crop protection product was applied in accordance with the application rules and application instructions.

The application documentation may be passed on to third parties (e.g., regulatory authorities, supervisory authorities, distributors, retailers, customers, manufacturers, traders, processors) to prove compliance with (market) standards as well as the origin of crop protection products and the way they are used.

The application information may be used to update the field passport and/or the crop passport and/or the device passport.

The following application information may be stored in the field passport: information about the crop protection product which was applied in the field, the time of the application of the crop protection product in the field, the amount(s) of crop protection products that were applied in one or more parts of the field, the conditions under which the crop protection product was applied in the field, and/or the application technique(s) that was used to apply the crop protection product in the field.

The application history may also be stored in the device passport, e.g. records of past applications made with the application device, including dates, products used, and/or fields treated.

The following application information may be stored in the crop passport: information about the crop protection product which was applied to the crop, the time of the application of the crop protection product to the crop, the amount of crop protection product that was applied to the crop, the conditions under which the crop protection product was applied to the crop, and/or the application technique that was used to apply the crop protection product to the crop.

The crop passport may include a crop product passport or a crop product passport may be generated from the crop passport.

A "crop product passport" is a documentation designed to provide transparency and/or traceability for agricultural products, such as fruits and/or vegetables. It serves as a record that details the journey of a crop from the field to the consumer, offering insights into its production practices, treatments, and/or handling. Such a crop product passport may help consumers to make informed choices about the food they purchase, enhances food safety, and/or supports sustainable agricultural practices. The crop product passport contains information about crop products obtained when the crop is harvested.

Information that may be contained in the crop product passport includes:
- product identification, e.g. name of the crop
- variety or cultivar information
- origin information, e.g. geographic location where the crop was grown (e.g., farm name, address, and/or coordinates)
- identification of the farm and/or producer, including contact information.
- production practices, e.g. details about cultivation methods (e.g., organic, conventional, integrated pest management)
- information on soil management and/or fertilization practices
- list of crop protection products applied during the growing season
- dates of application for each crop protection product, ensuring traceability regarding when treatments occurred
- date of harvest
- post-harvest treatments (e.g., washing, waxing, storage conditions)
- information on handling and/or transportation methods used after harvest
- certifications related to organic farming, sustainability, and/or food safety
- quality control measures taken during production and/or handling
- information on water usage, energy consumption, and/or other sustainability metrics related to the production of the crop product.
- contact information for concerns, e.g. details on how consumers can reach the producer and/or distributor for inquiries and/or concerns about the crop product.

The crop product passport can be digital and/or a printed document. The crop product passport may comprise an identifier, such as a barcode, QR code and/or RFID tag that allow consumers to access detailed information about the crop product's history. The crop product passport may be accessed via such an identifier.

The crop product passport may comprise one or more links to digital platforms and/or databases where consumers can find more information.

The crop protection passport may comprise or provide access to consumer guidance. Consumer guidance may include instructions for proper storage and/or handling of the crop product. Consumer guidance may include information on the expected shelf life and/or best-before dates.

By providing the information described herein, a crop product passport may enhance consumer trust and/or empowers them to make choices that align with their values regarding health, safety, and/or sustainability. It also may facilitate compliance with regulations and/or standards in the agricultural sector.

In an embodiment of the present disclosure, only authorized persons and/or devices can access the crop passport and/or field passport and/or the product passport and/or the crop product passport and/or the device passport.

In an embodiment of the present disclosure, information in the crop passport and/or field passport and/or product passport and/or the crop product passport and/or the device passport is stored and updated in such a way that changes can only be made by authorized persons and/or devices.

In an embodiment, the crop passport and/or the field passport and/or the product passport and/or the crop product passport and/or the device passport stores which person and/or which device made which changes to the respective passport and when.

In an embodiment, a history is stored for the field and/or the crop in the field passport and/or crop passport and/or the crop product passport, respectively, indicating which actions were performed in the field and/or with or on the crop/crop product. The history can indicate where and/or when and/or which crop protection product(s) was/were applied and/or under what circumstances and/or in what quantities it was/they were applied.

Preferably, at least some of the information in the crop passport is publicly accessible so that, for example, customers who wish to purchase a portion of the harvest can see the history. This information may, for example, be provided as the crop product passport.

Preferably, this part is made available in such a way that anyone can verify that the information is authentic. This can be achieved, for example, with a digital signature in a public key infrastructure.

A public key infrastructure (PKI) is a framework that supports the distribution and identification of public encryption keys, enabling users and computers and devices to both securely exchange data over networks and verify the identity of the other party.

In an embodiment of the present disclosure, the field passport and/or product passport and/or the devices passport and/or the crop passport and/or the crop product passport, including any modifications/updates that may be made thereto over time, are implemented as a blockchain.

A blockchain is a distributed ledger or database technology that provides a secure and tamper-proof method for recording transactions, agreements, contracts, or any data exchanges.

In an embodiment of the present disclosure, a blockchain comprise a chain of blocks, each containing information related to a status of a field and/or crop and/or crop product and/or crop protection product and/or application device. Every new block created is linked to the previous block through a cryptographic hash, forming a chronological chain. Once a new (e.g. updated) status is recorded in a block and added to the chain, it cannot be altered or deleted. This is because each block contains a unique hash of the previous block, creating a secure link between them. Altering any information in a previous block would require changing all subsequent blocks, which is computationally impractical due to the consensus mechanism required to validate changes. This immutable record-keeping ensures the authenticity of the data stored on the blockchain.

The blockchain may be a private blockchain (sometimes also referred to as permissioned blockchain). Unlike public blockchains, which are decentralized and allow anyone to participate in the process of block verification and block addition, private blockchains are centralized to a certain extent and are governed by a single organization or a consortium of selected participants. For example, the blockchain of the present disclosure may be accessible to some or all participants in the agricultural value chain. Such participants include, for example, seed manufacturers and/or distributors, manufacturers and/or distributors of crop protection products, farmers, manufacturers of machinery for cultivating agricultural fields, distributors and/or purchasers of harvested products and/or regulatory authorities.

Private blockchains restrict who can participate in the network. Access to the network is granted by the network administrator, and participants usually need an invitation or permission to join.

While still distributed among the nodes of the participants, the control over a private blockchain is centralized to a certain degree. The governing organization(s) have the authority to make decisions about the blockchain, including who is allowed to participate, how the consensus process is managed, and/or how the data is entered and accessed.

The blockchain of the present disclosure may be a public blockchain. A public blockchain is a decentralized network that anyone can join and participate in without needing permission. These blockchains are completely open, allowing any individual to become a node, participate in the consensus process, and validate block additions. The decentralized nature of a public blockchain, where the ledger is not stored in a single location but is distributed across multiple nodes, ensures the integrity and transparency of the data recorded on the blockchain.

In an embodiment of the present disclosure, the computer-implemented method of the present disclosure uses one or more blockchains. In this implementation, the product passport may include rules for the use of the crop protection product. The rules stored in the product passport may have been approved by a regulatory authority. The rules may be encoded into a smart contract. "Smart contracts" are selfexecuting contracts with the terms of the agreement directly written into lines of code. These smart contracts may be deployed on the blockchain. Being on the blockchain ensures that the rules are immutable and transparent to all participants.

A user (e.g. a farmer) may submit an intended use case (e.g. application of the crop protection product to a field) for the crop protection product through a blockchain-based application interface. This submission may include details such field information and/or crop information and/or product information and/or device information. Field information and/or crop information and/or product information and/or device information may be provided. Field information and/or crop information and/or product information and/or device information may be provided by the field passport and/or crop passport and/or the product passport and/or the device passport.

The data submitted by the user may trigger the smart contract, which automatically evaluates the submission against the encoded rules. If the intended use complies with the rules, the smart contract automatically approves the use case.

Upon approval, a new smart contract may be generated for the specific application instruction on where, when and/or how an application device should use the crop protection product. This application instruction may be also encoded as a smart contract.

The application instruction may be transmitted to an application device. The application device may read the application instruction and uses the crop protection product according to the provided instructions. It is also possible for the application device to access the application instruction stored in the blockchain directly, e.g. via a mobile network.

The actions that the application device performs based on the application instruction, including the amount(s) of crop protection product along a route in the field, the time of application, and/or the operational parameters, may be automatically recorded on the blockchain or transmitted to the blockchain. This creates an immutable and transparent record of the actual application.

After the application device has applied the crop protection product in the field, a compliance verification smart contract may be triggered. This smart contract may automatically check the recorded application against the original rules encoded by the regulatory authority. The outcome of this verification may be stored on the blockchain.

The regulatory authority may review the stored outcomes and the detailed records of use at any time. Since all data and actions are recorded on the blockchain, the regulatory authority has a transparent and tamper-proof log of all activities for audit and compliance verification purposes.

The process described here is largely automated. In the process described here, only the submission of a use case was carried out as a manual process by a user. All other steps may be carried out without further human intervention.

In principle, however, the submission of a use case can also be automated. For example, infestation information may trigger such a use case. Using sensors and/or weather information and/or an infestation model, an infestation and/or risk of infestation of a field with a harmful organism can be automatically detected and the detection can trigger a need to apply a crop protection product to control the infestation.

Further embodiments are disclosed below. These embodiments are not necessarily subject matter that is covered by patent protection. As is known to those skilled in the art of patent protection, the scope of protection of a patent is defined by the patent claims. The description and drawings are to be used to interpret the patent claims. The embodiments described below are part of the description and not of the patent claims. The following embodiments are intended to give the reader an indication of how various features described in this disclosure can be combined. They are therefore part of the present technical teaching and should not be confused with the subject matter of the patent claims.

Embodiment 1: A computer-implemented method comprising:
- providing a digital field passport, wherein the field passport specifies an agricultural field for the cultivation of a crop,
- receiving and/or determining infestation information about an acute or imminent infestation of the field and/or the crop with a harmful organism,
- determining and/or selecting a crop protection product based on the infestation information,
- providing a digital product passport, wherein the product passport specifies how the crop protection product is to be used,
- generating an application instruction based on the product passport, and the field passport, whereby the application instruction specifies how the crop protection product is to be used in the field to control the harmful organism,
- outputting the application instruction and/or storing the application instruction in a data storage and/or transmitting the application instruction to a separate computer system.

Embodiment 2: The method of embodiment 1, further comprising:
- providing a digital crop passport, wherein the crop passport specifies the crop grown or to be grown in the field.

Embodiment 3: The method of embodiment 2, wherein the application instruction is further based on the crop passport.

Embodiment 4: The method of any one of embodiments 1 to 3, further comprising:
- providing a digital device passport, wherein the device passport specifies an application device or type of application device for applying the crop protection product in the field and/or to the crop.

Embodiment 5: The method of embodiment 4, wherein the application instruction is further based on the device passport.

Embodiment 6: The method of any one of embodiments 1 to 5, further comprising:
- providing weather information, wherein the weather information specifies the weather in the field at a time an application of the crop protection product is planned.

Embodiment 7: The method of embodiment 6, wherein the application instruction is further based on the weather information.

Embodiment 8: The method of any one of embodiments 1 to 7, further comprising:
- providing environmental information, wherein the environmental information specifies the environment of the field.

Embodiment 9: The method of embodiment 8, wherein the application instruction is further based on the environmental information.

Embodiment 10: The method of any one of embodiments 1 to 9, further comprising:
- providing protection goals, wherein the protection goals specify general rules that apply to the application of a crop protection product or type of crop protection product.

Embodiment 11: The method of embodiment 10, wherein the application instruction is further based on the protection goals.

Embodiment 12: The method of any one of embodiments 1 to 11, further comprising:
- transmitting the application instruction to an/the application device.

Embodiment 13: The method of any one of embodiments 1 to 12, further comprising:
- receiving information about an application of the crop protection product from the application device.

Embodiment 14: The method of embodiment 13, further comprising:
- generating an application documentation based on the information received from the application device.

Embodiment 15: The method of embodiment 14, further comprising:
- transmitting the application documentation to a separate computer system to check whether the application was in accordance with the application rules and/or the application instructions.

Embodiment 16: The method of embodiment 15, further comprising:
- receiving a compliance report from the separate computer system.

Embodiment 17: The method of any one of embodiments 1 to 16, further comprising:
- generating a crop product passport based on the crop passport.

Embodiment 18: The method of any one of embodiments 14 to 17, further comprising:
- generating a crop product passport based on the crop passport and the application documentation.

Embodiment 19: The method of any one of embodiments 1 to 18, further comprising:
- providing a crop product passport and updating the crop product passport based on the application documentation.

Embodiment 20: The method of any one of embodiments 14 to 19, further comprising:
- updating the crop passport based on the application documentation.

Embodiment 21: The method of any one of embodiments 14 to 20, further comprising:
- updating the field passport based on the application documentation.

Embodiment 22: The method of any one of embodiments 14 to 21, further comprising:
- updating the device passport based on the application documentation.

Embodiment 23: The method of any one of embodiments 2 to 22, further comprising:
- making the crop passport available to third parties.

Embodiment 24: The method of any one of embodiments 20 to 23, further comprising:
- making the updated crop passport available to third parties.

Embodiment 25: The method of any one of embodiments 17 to 24, further comprising:
- making the crop product passport available to third parties.

Embodiment 26: The method of any one of embodiments 19 to 25, further comprising:
- making the updated crop product passport available to third parties.

Embodiment 27: The method of any one of embodiments 1 to 26, wherein the field passport specifies the location of the field using geocoordinates.

Embodiment 28: The method of any one of embodiments 1 to 27, wherein the field passport comprises topographic information about the field.

Embodiment 29: The method of any one of embodiments 1 to 28, wherein the field passport comprises topologic information about the field.

Embodiment 30: The method of any one of embodiments 1 to 29, wherein the field passport specifies which soil type(s) is/are present in the field.

Embodiment 31: The method of any one of embodiments 1 to 30, wherein the field passport specifies crops that were previously grown in the field.

Embodiment 32: The method of any one of embodiments 1 to 31, wherein the field passport comprises climate information about the field and/or its environment.

Embodiment 33: The method of any one of embodiments 1 to 32, wherein the field passport comprises information about an environment of the field.

Embodiment 34: The method of any one of embodiments 1 to 33, wherein the field passport comprises a digital field map.

Embodiment 35: The method of any one of embodiments 2 to 34, wherein the crop passport comprises information on whether the crop has already been treated with one or more crop protection products and/or with which crop protection product(s) the crop has been treated and/or when it has been treated with one or more crop protection products and/or how it has been treated with one or more crop protection products.

Embodiment 36: The method of any one of embodiments 2 to 35, wherein the crop passport comprises information on the biomass present in the field.

Embodiment 37: The method of any one of embodiments 1 to 36, wherein the harmful organism is selected from: weed, animal pest, fungus, pathogen.

Embodiment 38: The method of any one of embodiments 1 to 37, wherein the infestation information is obtained by one or more sensors in the field and/or by one or more sensors on agricultural machinery and/or robots moving through the field and/or by remote sensing.

Embodiment 39: The method of any one of embodiments 1 to 38, wherein the infestation information is provided by an infestation model.

Embodiment 40: The method of any one of embodiments 2 to 39, wherein the determining and/or selecting of the crop protection product is further based on crop information from the crop passport and/or field information from the field passport.

Embodiment 41: The method of any one of embodiments 1 to 40, wherein the product passport comprises application rules for the application of the crop protection product.

Embodiment 42: The method of embodiment 41, wherein the application rules are available in the product passport as rules as code.

Embodiment 43: The method of any one of embodiments 41 to 42, wherein the application rules specify where and/or when the crop protection product may and/or may not be used.

Embodiment 44: The method of any one of embodiments 41 to 43, wherein the application rules specify a time interval that should or must be observed between two consecutive applications of the crop protection product.

Embodiment 45: The method of any one of embodiments 41 to 44, wherein the application rules specify a time interval to be observed between a previous application of the crop protection product and/or another crop protection product.

Embodiment 46: The method of any one of embodiments 41 to 45, wherein the application rules specify a time interval to be observed between an application of the crop protection product and harvest of the crop.

Embodiment 47: The method of any one of embodiments 41 to 46, wherein the application rules specify minimum and/or maximum quantities of the crop protection product that must be adhered to.

Embodiment 48: The method of any one of embodiments 41 to 47, wherein the application rules specify distances that must be maintained from defined areas when applying the crop protection product.

Embodiment 49: The method of any one of embodiments 41 to 48, wherein the application rules specify circumstances under which the crop protection product should not or must not be applied.

Embodiment 50: The method of any one of embodiments 41 to 49, wherein the application rules specify one or more application techniques to be used to apply the crop protection product.

Embodiment 51: The method of any one of embodiments 41 to 50, wherein the application rules specify a required precision of an application of the crop protection product.

Embodiment 52: The method of embodiment 51, wherein the precision is a spatial precision, a temporal precision and/or a dosage precision.

Embodiment 53: The method of any one of embodiments 41 to 52, wherein the application rules specify weather conditions under which the crop protection product may and/or may not be used.

Embodiment 54: The method of any one of embodiments 1 to 53, wherein the product passport comprises a digital certificate that certifies the authenticity of the product passport.

Embodiment 55: The method of any one of embodiments 1 to 54, wherein the product passport comprises an authorization for using the crop protection product.

Embodiment 56: The method of any one of embodiments 1 to 55, wherein the product passport defines an authorized use of the crop protection product.

Embodiment 57: The method of any one of embodiments 1 to 56, wherein the product passport comprises an expiration date, wherein the expiration date specifies the date of expiration of the authorization.

Embodiment 58: The method of any one of embodiments 1 to 57, wherein generating the application instruction comprises: applying the application rules to the field and/or to the crop and/or to the application device.

Embodiment 59: The method of any one of embodiments 1 to 58, wherein the application instruction comprises machine-readable instructions for the application device.

Embodiment 60: The method of any one of embodiments 1 to 59, wherein the application instruction specifies an amount of the crop protection product to be applied to the field to control the harmful organism.

Embodiment 61: The method of any one of embodiments 1 to 60, wherein the application instruction includes spatially resolved information indicating quantities of the crop protection product to be applied in different parts of the field.

Embodiment 62: The method of any one of embodiments 1 to 61, wherein the application instruction comprises a digital map of the field.

Embodiment 63: The method of any one of embodiments 1 to 62, wherein the application instruction comprises a digital application map of the field.

Embodiment 64: The method of any one of embodiments 1 to 63, wherein the application instruction includes information on distances that must be maintained from the field's boundaries.

Embodiment 65: The method of any one of embodiments 1 to 64, wherein the application instruction includes information about an application method to be used and/or application parameters to be observed.

Embodiment 66: The method of any one of embodiments 14 to 65, wherein the application documentation comprises information on when and/or where and/or which quantities of one or more crop protection products were applied to the field and/or to the crop.

Embodiment 67: The method of any one of embodiments 14 to 66, wherein the application documentation comprises information on conditions prevailing during the application of the crop protection product.

Embodiment 68: The method of any one of embodiments 14 to 67, wherein the application documentation comprises information on the application method and/or application parameters used in the application of the crop protection product.

Embodiment 69: The method of any one of embodiments 14 to 68, wherein the application documentation comprises information/data that was used to generate the application instruction and/or the application instruction itself.

Embodiment 70: The method of any one of embodiments 14 to 69, wherein the application documentation comprises information about one or more models and/or model parameters that were used to generate the application instruction.

Embodiment 71: The method of any one of embodiments 14 to 70, wherein the application documentation comprises product information from the product passport or the product passport itself.

Embodiment 72: The method of any one of embodiments 14 to 71, wherein the application documentation comprises field information and/or environmental information from the field passport or the field passport itself.

Embodiment 73: The method of any one of embodiments 14 to 72, wherein the application documentation comprises crop information from the crop passport or the crop passport itself.

Embodiment 74: The method of any one of embodiments 14 to 73, wherein the application documentation comprises device information from the device passport or the device passport itself.

Embodiment 75: The method of any one of embodiments 14 to 74, wherein the application documentation comprises the infestation information.

Embodiment 76: The method of any one of embodiments 14 to 75, wherein the application documentation comprises weather information about the weather before and/or during and/or after the application of the crop protection product to the field and/or to the crop.

Embodiment 77: The method of any one of embodiments 14 to 76, wherein the application documentation comprises a reference to the product passport, the field passport, the crop passport, the device passport, the application rules, the application instruction and/or further information.

Embodiment 79: The method of any one of embodiments 1 to 77, wherein the field passport and/or the crop passport and/or the device passport and/or the product passport and/or the crop product passport, including modifications and/or updates made thereto over time, are implemented as a blockchain.

Another aspect of the present disclosure is an infrastructure. The infrastructure enables various participants to take part in an agricultural value chain. Such participants include, for example, seed manufacturers and/or distributors, manufacturers and/or distributors of crop protection products, farmers, manufacturers of machinery for cultivating agricultural fields, distributors and/or purchasers of harvested products and/or regulatory authorities.

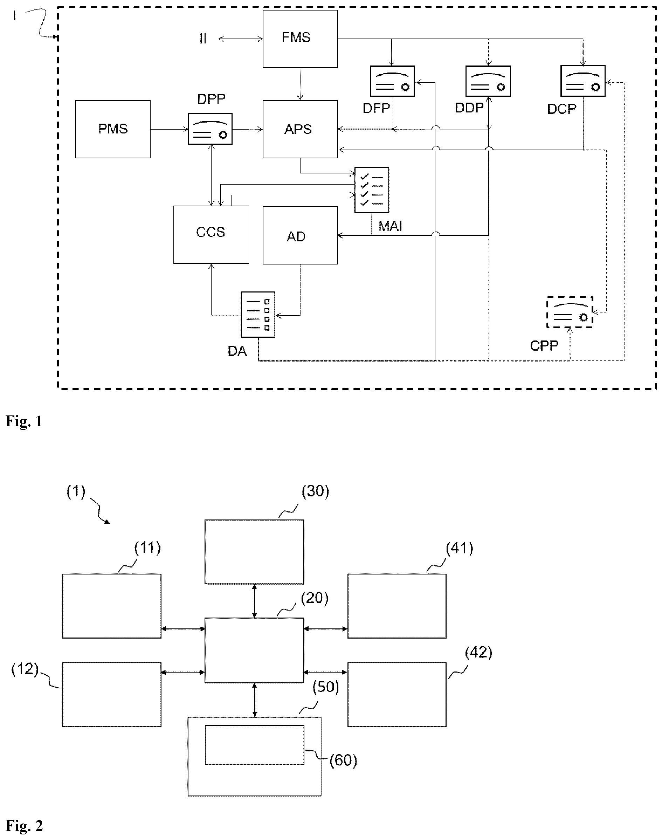

Fig. 1 schematically shows an embodiment of such an infrastructure.

The infrastructure (I) comprises a field management system (FMS), also referred to as farm management system. A field management system is a system that a farmer can use to manage one or more fields. The field management system (FMS) usually includes at least one computer system.

The field management system (FMS) is configured to provide a digital field passport (DFP). The field passport (DFP) specifies an agricultural field for the cultivation of a crop. The field passport (DFP) may have been generated as described herein.

The field management system (FMS) may be configured to provide a digital crop passport (DCP). The crop passport (DCP) specifies the crop grown or to be grown in the field. The crop passport (DCP) may be part of the field passport (DFP).

The field management system (FMS) may be configured to provide a digital device passport (DDP). The device passport (DDP) specifies one or more application devices owned or controlled by the farmer. The device passport (DDP) may also be provided by a manufacturer and/or distributor of the one or more application devices. The device passport (DDP) may also be provided by the application device (AD).

The field management system (FMS) is also configured to receive and/or determine infestation information (II) about an acute or imminent infestation of the field and/or the crop with a harmful organism.

Infestation information (II) may be transmitted by another computer system. Infestation information (II) may be received from one or more sensors in and/or above the field. Infestation information (II) may be determined using an infestation model. The infestation model may be part of the field management system (FMS) or part of another computer system.

The infestation information (II) may indicate that the field is infested with a harmful organism and/or an infestation is imminent and/or a damage threshold has been exceeded.

Based on the infestation information (II) (and optionally further information such as field information and/or crop information and/or device information), a crop protection product is determined and/or selected to control the infestation. It is possible that more than one crop protection products are determined/selected.

The infrastructure (I) further comprises a product management system (PMS). The product management system (PMS) usually comprises at least one computer system. The product management system (PMS) is configured to provide a digital product passport (DPP) for the determined/selected crop protection product.

The product passport (DPP) comprises general application rules for an application of the crop protection product. The application rules may have been provided and/or confirmed and/or approved by a regulatory authority. In an embodiment of the present disclosure, the application rules are present as rules as code.

The infrastructure (I) further comprises an application planning system (APS). The application planning system (APS) usually includes at least one computer system. The application planning system (APS) may be part of the field management system (FMS) or a separate system.

The application planning system (APS) is configured to generate application instructions based on the digital product passport (DPP), e.g. the application instructions, the digital field passport (DFP) and optionally further information such as the digital crop passport (DCP) (if available) and/or the digital device passport (DDP) (if available) and/or weather information.

The application planning system (APS) may be configured to convert the general application rules into a specific application instruction for the application of the crop protection product in the field using field information and/or crop information and/or product information and/or weather information and/or device information and/or further information. The specific application instruction may comprise machine-readable application instructions (MAI).

The infrastructure (I) further comprises an application device (AD). The application planning system (APS) is configured to transmit the machine-readable application instructions (MAI) to the application device (AD). The application device (AD) usually comprises at least one computer system.

The application device (AD) is configured to execute the machine-readable application instructions (MAI). One result of executing the application instructions (MAI) is that the crop protection product is applied to the field and/or the crop.

The application device (AD) is also configured to document the application of the crop protection product to the field and/or the crop. In other words, the application device (AD) is configured to generate an application documentation (DA).

The infrastructure (I) may comprise a compliance check system (CCS). The compliance check system (CCS) usually comprises at least one computer system. The compliance check system (CCS) is configured to check whether the documented application of the crop protection product is in accordance with the application rules. The compliance check system (CCS) may be configured to compare the application documentation (DA) with the application rules and determine deviations.

The compliance check system (CCS) may be configured to issue a message if the application document (DA) is not in line with the application rules.

The application documentation (DA) can be used to update the field passport (DFP) and/or the crop passport (DCP) and/or the device passport (DDP) (if available) and/or the crop product passport (DCPP) (if available).

Based on the application documentation (DA) and/or the crop passport (DCP) a crop product passport CCP) may be generated. The crop product passport (CPP) may be machine- and/or human-readable. The crop product passport (CPP) may be digital and/or a printed document. The crop product passport (CPP) contains information about crop products obtained when the crop is harvested.

The infrastructure components are part of a network.

The network can be or include a wide area network (WAN). A WAN can connect multiple locations, allowing for data sharing and communication between different sites.

The network can be or include a cloud network. Utilizing cloud computing services can provide scalable storage and processing power, enabling remote access and collaboration among participants from various locations.

The network can be or include a virtual private network (VPN). A VPN can secure remote access to infrastructure, ensuring that sensitive data is transmitted securely.

The network can make use of the Internet.

Internet of things (IoT) devices such as sensors can be integrated to collect real-time data on field information, crop information, infestation information, weather information, environmental conditions, and/or usage of the crop protection product in the field.

Mobile networks can support field data collection through mobile devices.

The infrastructure components may use public key authentication. This method leverages asymmetric cryptography, where a pair of keys, a public key and a private key, is used to authenticate users and/or devices. The entity attempting to authenticate proves its identity by demonstrating possession of the private key without revealing it. A common method involves signing a challenge and/or message with the private key, which the verifying party can check using the public key.

Communication between devices and/or users may be encrypted.

The digital product passports, digital field passport, digital crop passport, digital crop product passport and/or may digital device passport be part of one or more blockchains, as described in this disclosure.

The digital product passports, digital field passport, digital crop passport, digital crop product passport and/or may digital device passport may include a certificate to prove their authenticity. The certificates may be based on private keys, so that anyone can verify their authenticity using the corresponding public keys.

Further embodiments are:
Embodiment 80: An infrastructure comprising:
   - a field management system, wherein the field management system is configured to
      ∘ provide a digital field passport, wherein the field passport specifies an agricultural field for the cultivation of a crop,
      ∘ receive and/or determine infestation information about an acute or imminent infestation of the field and/or the crop with a harmful organism, and
      ∘ determine and/or select a crop protection product based on the infestation information,
         - a product management system, wherein the product management system is configured to provide a digital product passport for a crop protection product, wherein the product passport comprises application rules for an application of the crop protection product,
         - an application planning system, wherein the application planning system is configured to generate an application instruction comprising machine-readable instructions for the application of the crop protection product in the field based on the product passport and the field passport,
         - an application device, wherein the application device is configured to execute the machine-readable instructions thereby applying the crop protection product to the field and/or the crop.
Embodiment 81: The infrastructure of embodiment 80, wherein the application instruction is further based on weather information.
Embodiment 82: The infrastructure of embodiment 80 or 81, wherein the application planning system is configured to provide environmental information, and the application instruction is further based on environmental information.
Embodiment 83: The infrastructure of any one of embodiments 80 to 82, wherein the application instruction is characterized by one or more features of any one of the embodiments 1 to 79.
Embodiment 84: The infrastructure of any one of embodiments 80 to 83, wherein the field passport is characterized by one or more features of any one of the embodiments 1 to 79.
Embodiment 85: The infrastructure of any one of embodiments 80 to 84, wherein the product passport is characterized by one or more features of any one of the embodiments 1 to 79.
Embodiment 86: The infrastructure of any one of embodiments 80 to 85, wherein the product passport comprises application rules for the application of the crop protection product.
Embodiment 87: The infrastructure of any one of embodiments 80 to 86, wherein the application rules are characterized by one or more features of any one of the embodiments 1 to 79.
Embodiment 88: The infrastructure of any one of embodiments 80 to 82, wherein the application planning system is configured to provide a digital device passport, wherein the digital device passport specifies the application device.
Embodiment 89: The infrastructure of embodiment 88, wherein the application instruction is further based on the device passport.
Embodiment 90: The infrastructure of any one of embodiments 80 to 89, wherein the machine-readable instructions cause the application device to apply a defined amount of one or more crop protection products in the field
Embodiment 91: The infrastructure of any one of embodiments 80 to 90, wherein the machine-readable instructions cause the application device to move along a defined route through or over the field.
Embodiment 92: The infrastructure of any one of embodiments 80 to 91, wherein the machine-readable instructions cause the application device to maintain required distances to field boundaries.
Embodiment 93: The infrastructure of any one of embodiments 80 to 92, wherein the machine-readable instructions ensure that appropriate and/or approved spray nozzles are used for the application of the crop protection product in the field and/or to the crop.
Embodiment 94: The infrastructure of any one of embodiments 80 to 93, wherein the machine-readable instructions ensure that crop protection products are only applied if this is intended according to the application instruction and/or application rules.
Embodiment 95: The infrastructure of any one of embodiments 80 to 94, wherein the machine-readable instructions cause the application device to apply defined quantities of the protection product along a route.
Embodiment 96: The infrastructure of any one of embodiments 80 to 95, wherein the application device is equipped with a timer and/or has access to the current time, and the machine-readable instructions cause a check whether the current time is within the time frame for which application of a crop protection product in the field is intended and/or permitted and/or possible according to the application instruction and/or application rules.
Embodiment 97: The infrastructure of any one of embodiments 80 to 96, wherein the machine-readable instructions cause a check whether the current time is within a time frame during which the application of the crop protection product in the field is not allowed, and, in case application is not allowed, refuse the application and optionally cause issuance of a corresponding message to a user.
Embodiment 98: The infrastructure of any one of embodiments 80 to 97, wherein the machine-readable instructions cause a check whether an approval for the application of the crop protection product in the field is in effect, and, in case the permission is not present, deny the application, and optionally issue a corresponding message to a user.
Embodiment 99: The infrastructure of any one of embodiments 80 to 98, wherein the machine-readable instructions cause a check whether the crop protection product in a tank of the application device matches the crop protection product of the application instruction and/or application rules, and, in case the crop protection products do not match, deny the application, and optionally issue a corresponding message to a user.
Embodiment 100: The infrastructure of any one of embodiments 80 to 99, wherein the application device is equipped with one or more sensors selected from: camera, GPS sensor, flow meter, pressure sensor, temperature sensor, humidity sensor, wind speed sensor, wind direction sensor, optical sensor, rate controller, tilt and/or angle sensor, soil moistures sensor.
Embodiment 101: The infrastructure of any one of embodiments 80 to 100, wherein the application device is further configured to document the application of the crop protection product to the field and/or the crop.
Embodiment 102: The infrastructure of any one of embodiments 80 to 101, wherein the application device is further configured to generate and provide an application documentation.
Embodiment 103: The infrastructure of any one of embodiments 80 to 102, wherein the application documentation comprises application information, the application information specifying the application of the crop protection product in the field and/or to the crop.
Embodiment 104: The infrastructure of embodiment 103, wherein the application information contains location and/or route data.
Embodiment 105: The infrastructure of embodiment 103 or 104, wherein the application information contains the date and/or time of application of the crop protection product.
Embodiment 106: The infrastructure of any one of embodiments 103 to 105, wherein the application information contains information about the field where the application took place
Embodiment 107: The infrastructure of any one of embodiments 103 to 106, wherein the application information contains information about the crop protection product used
Embodiment 108: The infrastructure of any one of embodiments 103 to 107, wherein the application information contains information about the quantity of the crop protection product applied.
Embodiment 109: The infrastructure of any one of embodiments 103 to 108, wherein the application information contains information about environmental conditions during application,
Embodiment 110: The infrastructure of any one of embodiments 103 to 109, wherein the application information contains information about the application device used for the application,
Embodiment 111: The infrastructure of any one of embodiments 103 to 110, wherein the application information contains information about parameters of the application device used for the application.
Embodiment 112: The infrastructure of any one of embodiments 103 to 111, wherein the application information contains the crop being treated and/or the pests or diseases being targeted.
Embodiment 113: The infrastructure of any one of embodiments 103 to 102, wherein the application information contains a total volume and/or weight of the crop protection product applied.
Embodiment 114: The infrastructure of any one of embodiments 103 to 113, wherein the application information contains information about the application method used.
Embodiment 115: The infrastructure of any one of embodiments 80 to 114, further comprising a compliance check system configured to check whether the documented application of the crop protection product is in accordance with the application instructions and/or application rules.
Embodiment 116: The infrastructure of any one of embodiments 80 to 115, wherein the field management system, product management system, application planning system and compliance check system are connected to each other via a network.
Embodiment 117: The infrastructure of any one of embodiments 80 to 116, wherein the field management system, product management system, application planning system and compliance check system use public key authentication.
Embodiment 118: The infrastructure of any one of embodiments 80 to 117, wherein the product passport, field passport, device passport and/or crop passport are part of one or more blockchains.
Embodiment 119: The infrastructure of any one of embodiments 80 to 118, further comprising one or more sensors configured to sense the presence of a harmful organism in the field and/or an impending infestation of the field with a harmful organism and/or a defined risk of infestation of the field with a harmful organism and/or an exceedance of a defined infestation threshold.

The operations in accordance with the teachings herein may be performed by at least one computer system specially constructed for the desired purposes or general-purpose computer specially configured for the desired purpose by at least one computer program stored in a typically non-transitory computer readable storage medium.

A "computer system" is a system for electronic data processing that processes data by means of programmable calculation rules. Such a system usually comprises a "computer", that unit which comprises a processor for carrying out logical operations, and also peripherals.

**In** computer technology, "peripherals" refer to all devices which are connected to the computer and serve for the control of the computer and/or as input and output devices. Examples thereof are monitor (screen), printer, scanner, mouse, keyboard, drives, camera, microphone, loudspeaker, etc. Internal ports and expansion cards are, too, considered to be peripherals in computer technology.

Computer systems of today are frequently divided into desktop PCs, portable PCs, laptops, notebooks, netbooks and tablet PCs and so-called handhelds (e.g. smartphone); all these systems can be utilized for carrying out the computer-implemented method of the present disclosure.

The term "non-transitory" is used herein to exclude transitory, propagating signals or waves, but to otherwise include any volatile or non-volatile computer memory technology suitable to the application.

The term "computer system" should be broadly construed to cover any kind of electronic device with data processing capabilities, including, by way of non-limiting example, personal computers, servers, embedded cores, computing system, communication devices, processors (e.g., digital signal processor (DSP)), microcontrollers, field programmable gate array (FPGA), application specific integrated circuit (ASIC), etc.) and other electronic computing devices.

The term "process" as used above is intended to include any type of computation or manipulation or transformation of data represented as physical, e.g., electronic, phenomena which may occur or reside e.g., within registers and/or memories of at least one computer system or processor. The term processing unit includes a single processor or a plurality of distributed or remote such units.

Fig. 2 illustrates a computer system (1) according to some example implementations of the present disclosure in more detail. The computer system may include one or more of each of a number of components such as, for example, a processing unit (20) connected to a memory (50) (e.g., storage device).

The processing unit (20) may be composed of one or more processors alone or in combination with one or more memories. The processing unit (20) is generally any piece of computer hardware that is capable of processing information such as, for example, data, computer programs and/or other suitable electronic information. The processing unit (20) is composed of a collection of electronic circuits some of which may be packaged as an integrated circuit or multiple interconnected integrated circuits (an integrated circuit at times more commonly referred to as a "chip"). The processing unit (20) may be configured to execute computer programs (60), which may be stored onboard the processing unit or otherwise stored in the memory (50) of the same or another computer.

The processing unit (20) may be a number of processors, a multi-core processor or some other type of processor, depending on the particular implementation. Further, the processing unit (20) may be implemented using a number of heterogeneous processor systems in which a main processor is present with one or more secondary processors on a single chip. As another illustrative example, the processing unit (20) may be a symmetric multi-processor system containing multiple processors of the same type. In yet another example, the processing unit (20) may be embodied as or otherwise include one or more ASICs, FPGAs or the like. Thus, although the processing unit (20) may be capable of executing a computer program (60) to perform one or more functions, the processing unit (20) of various examples may be capable of performing one or more functions without the aid of a computer program (60). In either instance, the processing unit (20) may be appropriately programmed to perform functions or operations according to example implementations of the present disclosure.

The memory (50) is generally any piece of computer hardware that is capable of storing information such as, for example, data, images, computer programs (e.g., computer-readable program code (60)), machine learning models and/or other suitable information either on a temporary basis and/or a permanent basis. The memory may include volatile and/or non-volatile memory, and may be fixed or removable. Examples of suitable memory include random access memory (RAM), read-only memory (ROM), a hard drive, a flash memory, a thumb drive, a removable computer diskette, an optical disk, a magnetic tape or some combination of the above. Optical disks may include compact disk - read only memory (CD-ROM), compact disk - read/write (CD-R/W), DVD, Blu-ray disk or the like. In various instances, the memory may be referred to as a computer-readable storage medium. The computer-readable storage medium is a non-transitory device capable of storing information, and is distinguishable from computer-readable transmission media such as electronic transitory signals capable of carrying information from one location to another. Computer-readable medium as described herein may generally refer to a computer-readable storage medium or computer-readable transmission medium.

In addition to the memory (50), the processing unit (20) may also be connected to one or more interfaces for displaying, transmitting and/or receiving information. The interfaces may include one or more communications interfaces and/or one or more user interfaces. The communications interface(s) may be configured to transmit and/or receive information, such as to and/or from other computer(s), network(s), database(s), camera(s) or the like. The communications interface may be configured to transmit and/or receive information by physical (wired) and/or wireless communications links. The communications interface(s) may include interface(s) (41) to connect to a network, such as using technologies such as cellular telephone, Wi-Fi, satellite, cable, digital subscriber line (DSL), fiber optics and the like. In some examples, the communications interface(s) may include one or more short-range communications interfaces (42) configured to connect devices using short-range communications technologies such as NFC, RFID, Bluetooth, Bluetooth LE, ZigBee, infrared (e.g., IrDA) or the like.

The user interfaces may include a display (30). The display (30) may be configured to present or otherwise display information to a user, suitable examples of which include a liquid crystal display (LCD), light-emitting diode display (LED), plasma display panel (PDP) or the like. The user input interface(s) (11) may be wired or wireless, and may be configured to receive information from a user into the computer system (1), such as for processing, storage and/or display. Suitable examples of user input interfaces include a microphone, image or video capture device, keyboard or keypad, joystick, touch-sensitive surface (separate from or integrated into a touchscreen) or the like. In some examples, the user interfaces may include automatic identification and data capture (AIDC) technology (12) for machine-readable information. This may include barcode, radio frequency identification (RFID), magnetic stripes, optical character recognition (OCR), integrated circuit card (ICC), and the like. The user interfaces may further include one or more interfaces for communicating with peripherals such as printers, cameras and the like.

As indicated above, a computer program (60) may be stored in memory (50), and executed by processing unit (20) that is thereby programmed, to implement functions of the systems, subsystems, tools and their respective elements described herein. As will be appreciated, any suitable program code instructions may be loaded onto a computer or other programmable apparatus from a computer-readable storage medium to produce a particular machine, such that the particular machine becomes a means for implementing the functions specified herein. These program code instructions may also be stored in a computer-readable storage medium that can direct a computer, processing unit or other programmable apparatus to function in a particular manner to thereby generate a particular machine or particular article of manufacture. The instructions stored in the computer-readable storage medium may produce an article of manufacture, where the article of manufacture becomes a means for implementing functions described herein. The program code instructions may be retrieved from a computer-readable storage medium and loaded into a computer, processing unit or other programmable apparatus to configure the computer, processing unit or other programmable apparatus to execute operations to be performed on or by the computer, processing unit or other programmable apparatus.

Retrieval, loading and execution of the program code instructions may be performed sequentially such that one instruction is retrieved, loaded and executed at a time. In some example implementations, retrieval, loading and/or execution may be performed in parallel such that multiple instructions are retrieved, loaded, and/or executed together. Execution of the program code instructions may produce a computer-implemented process such that the instructions executed by the computer, processing circuitry or other programmable apparatus provide operations for implementing functions described herein.

Execution of instructions by processing unit, or storage of instructions in a computer-readable storage medium, supports combinations of operations for performing the specified functions. In this manner, a computer system (1) may include processing unit (20) and a computer-readable storage medium or memory (50) coupled to the processing circuitry, where the processing circuitry is configured to execute computer-readable program code (60) stored in the memory. It will also be understood that one or more functions, and combinations of functions, may be implemented by special purpose hardware-based computer systems and/or processing circuitry which perform the specified functions, or combinations of special purpose hardware and program code instructions.

Further embodiments are:
Embodiment 120: One or more computer systems configured to perform the method of any one of embodiments 1 to 79.
Embodiment 121: One or more computer systems, each comprising:
   a processing unit; and
   a memory storing a computer program configured, when executed by the processing unit, to cause the one or more computer systems to perform the following:
      - providing a digital field passport, wherein the field passport specifies an agricultural field for the cultivation of a crop,
      - receiving and/or determining infestation information about an acute or imminent infestation of the field and/or the crop with a harmful organism,
      - determining and/or selecting a crop protection product based on the infestation information,
      - providing a digital product passport, wherein the product passport specifies how the crop protection product is to be used,
      - generating an application instruction based on the product passport, and the field passport, whereby the application instruction specifies how the crop protection product is to be used in the field to control the harmful organism,
      - outputting the application instruction and/or storing the application instruction in a data storage and/or transmitting the application instruction to a separate computer system.
Embodiment 122: The one or more computer systems of embodiment 120 or 121, wherein one or more computer systems are configured to contact one or more separate computer systems and/or databases at defined times and/or in defined time intervals to check whether infestation information is available.
Embodiment 123: The one or more computer systems of any one of embodiments 120 to 122, wherein one or more computer systems are configured to check at defined times and/or in defined time intervals using an infestation model whether there is an infestation of the field with a harmful organism or an impending infestation of the field with a harmful organism or a defined risk of infestation of the field with a harmful organism or an exceedance of a defined infestation threshold.
Embodiment 124: The one or more computer systems of any one of embodiments 120 to 123, wherein one or more computer systems are configured to receive and/or retrieve sensor data at defined times and/or in defined time intervals.
Embodiment 125: The one or more computer systems of any one of embodiments 120 to 124, wherein one or more computer systems are configured to transmit the application instruction to an application device.
Embodiment 126: The one or more computer systems of any one of embodiments 120 to 125, wherein one or more computer systems are configured to receive information about the application of the crop protection product from the application device.
Embodiment 127: The one or more computer systems of embodiment 126, wherein one or more computer systems are configured to generate an application documentation based on the information received from the application device.
Embodiment 128: The one or more computer systems of embodiment 127, wherein one or more computer systems are configured to check whether the application was in accordance with the application rules and/or the application instructions based on the application documentation.
Embodiment 129: The one or more computer systems of any one of embodiments 127 to 128, wherein one or more computer systems are configured to provide and update a crop passport based on the application documentation.
Embodiment 130: The one or more computer systems of any one of embodiments 127 to 129, wherein one or more computer systems are configured to update the field passport based on the application documentation.
Embodiment 131: The one or more computer systems of any one of embodiments 127 to 130, wherein one or more computer systems are configured to update the device passport based on the application documentation.
Embodiment 132: The one or more computer systems of any one of embodiments 127 to 131, wherein one or more computer systems are configured to generate a crop product passport based on the application documentation.
Embodiment 133: The one or more computer systems of any one of embodiments 127 to 132, wherein one or more computer systems are configured to provide and update a crop product passport based on the application documentation.
Embodiment 134: The one or more computer systems of any one of embodiments 129 to 133, wherein one or more computer systems are configured to make the crop passport available to third parties.
Embodiment 135: The one or more computer systems of any one of embodiments 133 to 134, wherein one or more computer systems are configured to make the updated crop passport available to third parties.
Embodiment 136: The one or more computer systems of any one of embodiments 133 to 135, wherein one or more computer systems are configured to make the crop product passport available to third parties.
Embodiment 137: The one or more computer systems of any one of embodiments 133 to 136, wherein one or more computer systems are configured to make the updated crop product passport available to third parties.

## Claims

1. A computer-implemented method comprising:
- providing a digital field passport, wherein the field passport specifies an agricultural field for the cultivation of a crop,
- receiving and/or determining infestation information about an acute or imminent infestation of the field and/or the crop with a harmful organism,
- determining and/or selecting a crop protection product based on the infestation information,
- providing a digital product passport, wherein the product passport specifies how the crop protection product is to be used,
- generating an application instruction based on the product passport, and the field passport, whereby the application instruction specifies how the crop protection product is to be used in the field to control the harmful organism,
- outputting the application instruction and/or storing the application instruction in a data storage and/or transmitting the application instruction to a separate computer system.

2. The method of claim 1, further comprising:
- providing a digital crop passport, wherein the crop passport specifies the crop grown or to be grown in the field, wherein the application instruction is further based on the crop passport, and/ or
- providing a digital device passport, wherein the device passport specifies an application device or type of application device for applying the crop protection product in the field and/or to the crop, wherein the application instruction is further based on the device passport,
and/or
- providing weather information, wherein the weather information specifies the weather in the field at a time an application of the crop protection product is planned, wherein the application instruction is further based on the weather information,
and/or
- providing environmental information, wherein the environmental information specifies the environment of the field, wherein the application instruction is further based on the environmental information.

3. The method of claim 2, further comprising:
- transmitting the application instruction to an/the application device,
- receiving information about the application of the crop protection product from the application device,
- generating an application documentation based on the information received from the application device.

4. The method of claim 3, further comprising:
- transmitting the application documentation to a separate computer system to check whether the application was in accordance with the application instruction,
- receiving a compliance report from the separate computer system.

5. The method of claim 5, further comprising:
- providing a crop product passport and updating the crop product passport based on the application documentation,
- making the updated crop passport available to third parties.

6. The method of any one of claims 1 to 5, wherein the field passport specifies the location of the field using geocoordinates, wherein the field passport comprises topographic information about the field, wherein the field passport comprises topologic information about the field, wherein the field passport specifies which soil type(s) is/are present in the field, wherein the field passport specifies crops that were previously grown in the field, wherein the field passport comprises a digital field map, wherein the crop passport comprises information on whether the crop has already been treated with one or more crop protection products and/or with which crop protection product(s) the crop has been treated and/or when it has been treated with one or more crop protection products and/or how it has been treated with one or more crop protection products.

7. The method of any one of claims 1 to 6, wherein the determining and/or selecting of the crop protection product is further based on crop information from the crop passport and/or field information from the field passport, wherein the product passport comprises application rules for the application of the crop protection product.

8. The method of claim 7, wherein the application rules are available in the product passport as rules as code, wherein the application rules specify where and/or when the crop protection product may and/or may not be used, wherein the application rules specify a time interval that should or must be observed between two consecutive applications of the crop protection product, wherein the application rules specify a time interval to be observed between a previous application of the crop protection product and/or another crop protection product, wherein the application rules specify minimum and/or maximum quantities of the crop protection product that must be adhered to, wherein the application rules specify distances that must be maintained from defined areas when applying the crop protection product.

9. The method of claim 7 or 8,
wherein the application rules specify one or more application techniques to be used to apply the crop protection product, and/or
wherein the application rules specify a required precision of an application of the crop protection product, wherein the precision is a spatial precision, a temporal precision and/or a dosage precision.

10. The method of any one of claims 1 to 9, wherein the product passport comprises a digital certificate that certifies the authenticity of the product passport, wherein the product passport comprises an authorization for using the crop protection product, wherein the product passport defines an authorized use of the crop protection product.

11. The method of any one of claims 7 to 10, wherein generating the application instruction comprises: applying the application rules to the field and/or to the crop and/or to the application device, wherein the application instruction comprises machine-readable instructions for the application device, wherein the application instruction specifies an amount of the crop protection product to be applied to the field to control the harmful organism, wherein the application instruction comprises a digital application map of the field, wherein the application instruction includes information on distances that must be maintained from the field's boundaries.

12. The method of any one of claims 3 to 11, wherein the application documentation comprises information on conditions prevailing during the application of the crop protection product, wherein the application documentation comprises information on the application method and/or application parameters used in the application of the crop protection product.

13. The method of any one of claims 3 to 12,
wherein the application documentation comprises product information from the product passport or the product passport itself, wherein the application documentation comprises field information and/or environmental information from the field passport or the field passport itself, wherein the application documentation comprises crop information from the crop passport or the crop passport itself, wherein the application documentation comprises device information from the device passport or the device passport itself,
and/or
wherein the application documentation comprises a reference to the product passport, the field passport, the crop passport, the device passport, the application rules, the application instruction and/or further information.

14. The method of any one of claims 1 to 13, wherein the field passport and/or the crop passport and/or the device passport and/or the product passport and/or the crop product passport, including modifications and/or updates made thereto over time, are implemented as a blockchain.

15. An infrastructure comprising:
- a field management system, wherein the field management system is configured to
∘ provide a digital field passport, wherein the field passport specifies an agricultural field for the cultivation of a crop,
∘ receive and/or determine infestation information about an acute or imminent infestation of the field and/or the crop with a harmful organism, and
∘ determine and/or select a crop protection product based on the infestation information,
- a product management system, wherein the product management system is configured to provide a digital product passport for a crop protection product, wherein the product passport comprises application rules for an application of the crop protection product,
- an application planning system, wherein the application planning system is configured to generate machine-readable instructions for the application of the crop protection product in the field based on the product passport and the field passport,
- an application device, wherein the application device is configured to execute the machine-readable instructions thereby applying the crop protection product to the field and/or the crop.

16. The infrastructure of claim 15, wherein the application planning system is configured to provide a digital device passport, wherein the digital device passport specified the application device, wherein the application instruction is further based on the device passport.

17. The infrastructure of claim 15 or 16, wherein the application device is further configured to document the application of the crop protection product to the field and/or the crop.

18. The infrastructure of any one of claims 15 to 17, further comprising a compliance check system configured to check whether the documented application of the crop protection product is in accordance with the application rules.

19. The infrastructure of claim 18, wherein the field management system, product management system, application planning system and compliance check system are connected to each other via a network, wherein the field management system, product management system, application planning system and compliance check system use public key authentication, wherein the product passports, field passport, device passport and/or crop passport are part of one or more blockchains.
